# EUROPÄISCHE PATENTSCHRIFT

(11) **EP 1 490 443 B1**
(45) Veröffentlichungstag und Bekanntmachung des Hinweises auf die Patenterteilung: **28.08.2019**
(21) Anmeldenummer: 02795085.6
(22) Anmeldetag: 02.12.2002
(51) Int. Cl.: C09D 5/08, C09D 175/16

(54) **POLYMERES BESCHICHTUNGSGEMISCH, VERFAHREN ZUM AUFBRINGEN DIESES BESCHICHTUNGSGEMISCHES AUF EINER METALLISCHEN UNTERLAGE ZUM SCHUTZ EINER KANTE ODER EINER NAHT, ÜBERZUG, DERART BESCHICHTETE UNTERLAGE UND DEREN VERWENDUNG**
POLYMERIC COATING MIXTURE, METHOD FOR APPLYING THIS COATING MIXTURE TO A METALLIC BASE FOR PROTECTING AN EDGE OR A PART, PROTECTIVE LAYER, A BASE COATED IN THIS MANNER AND THE USE THEREOF
MELANGE POLYMERE DE RECOUVREMENT, PROCEDE POUR APPLIQUER CE MELANGE DE RECOUVREMENT SUR UN SUPPORT METALLIQUE, AFIN DE PROTEGER UNE ARETE OU UNE SOUDURE, REVETEMENT, SUPPORT AINSI RECOUVERT ET LEURS UTILISATIONS

(30) Priorität: 05.12.2001 DE 10159552; 19.04.2002 DE 10217510
(43) Veröffentlichungstag der Anmeldung: 29.12.2004
(73) Patentinhaber: Chemetall GmbH, 60487 Frankfurt (DE); Gros, Georg, 77728 Oppenau (DE)
(72) Erfinder: GROS, Georg, 77728 Oppenau (DE); MAURUS, Norbert, 63225 Langen (DE); STELLNBERGER, Karl-Heinz, A-4491 Niederneukirchen (AT); SCHINZEL, Marcus, 65817 Eppstein (DE)
(74) Vertreter: BASF IP Association
(86) Internationale Anmeldenummer: PCT/EP2002/013594
(87) Internationale Veröffentlichungsnummer: WO 2003/048259

(56) Entgegenhaltungen:
- EP-A- 0 168 126
- WO-A-01/46286
- WO-A-01/92433
- WO-A-95/09724
- US-A- 3 932 368
- US-A- 4 695 598
- OHDAN YASUKARU ET AL: "Coating composition" CHEMICAL ABSTRACTS + INDEXES, AMERICAN CHEMICAL SOCIETY. COLUMBUS, US, Bd. 80, Nr. 20, 20. Mai 1974 (1974-05-20), Seite 82, XP002161826 ISSN: 0009-2258

## Beschreibung

Die Erfindung betrifft ein Verfahren zum Aufbringen des Beschichtungsgemisches für einen polymeren Überzug im Bereich der Kante oder/und einer Naht einer metallischen Unterlage sowie eine derartig beschichtete Unterlage, insbesondere ein Metallband, Metallblech oder ein metallisches Formteil, sowie dessen Verwendung.

Metallische Bänder, Bleche und Formteile werden in sehr großen Stückzahlen hergestellt. Mit mindestens einer Lackschicht beschichtete metallische Unterlagen haben bei bestimmten Fertigungsabläufen dennoch an Schnittkanten, an mit Tauchlack geschützten Kanten bzw. an Nähten wie z.B. an Falznähten einen unzureichenden oder gar keinen Korrosionsschutz. Bis heute ist kein ausreichend korrosionsbeständiges und für die schnelle Beschichtung geeignetes Verfahren zur Beschichtung mit einem korrosionsbeständigen Überzug geeignet, das den Schutz der Kanten oder/und der Nähte ermöglicht.

Dies erfordert - insbesondere bei Bandanlagen, die mit hoher Geschwindigkeit laufen - einen sehr hohen Aufwand an Anlagentechik und Energieeinsatz. Derzeit ist die Geschwindigkeit von Bandanlagen, bei denen die Härtung weitgehend oder vollständig durch UV-Bestrahlung vorgenommen werden soll, auf solche bis etwa 60 oder bis etwa 80 m/min begrenzt. In absehbarer Zukunft wird es Bandanlagen geben, die mit Beschichtungsgeschwindigkeiten im Bereich bis 160 oder sogar 200 m/min laufen werden. Der Investitionsaufwand ist dafür außerordentlich hoch.

Während z.B. die Stahlbleche, für deren Beschichtung die vorstehend beschriebenen Mischungen entwickelt wurden, bis jetzt meistens zum Erzielen einer höheren Korrosionsbeständigkeit chromatiert wurden, rückt man aus Gründen des Umweltschutzes davon mehr und mehr ab. Es wird davon ausgegangen, daß zumindest in der Automobilindustrie in naher Zukunft praktisch ausschließlich Bleche eingesetzt werden, die chromatfrei vorbehandelt und gegebenenfalls auch schon lackiert wurden.

Derartige nicht chromatierte metallische Unterlagen, also beispielsweise Stahlbänder oder Stahlbleche, erfordern, wie sich nun gezeigt hat, in einigen Fällen eine höhere Dicke der auf ihnen aufgebrachten polymeren Schicht, um die gleiche Korrosionsbeständigkeit wie bei chromatierten Blechen zu gewährleisten. Die Trockenfilmschichtdicke der polymeren Beschichtung, die auf die Vorbehandlungsbeschichtung aufgebracht wird, liegt oft nach dem Stand der Technik im Bereich von 10 bis 100 µm. Auch an eine Beschichtung im Bereich von Kanten oder/und Nähten werden dann höhere Anforderungen gerichtet.

Bisher wird üblicherweise kein z.B. streifenförmiger Schutz der Kanten- oder Nahtbereiche eingesetzt. Ein Verändern der Zusammensetzung der polymeren Gemische zur Ausbildung z.B. von Lacken für den Schutz der Kanten oder Nähte ist unvermeidlich, um beispielsweise eine Temperaturbeständigkeit bis etwa 180 °C für die Trocknung eines nachfolgend ggf. aufgebrachten Elektrotauchlacks und eine hohe Witterungsbeständigkeit zu erzielen. Auch die Haftfestigkeit des polymeren Überzugs auf dem Untergrund muß meistens höher sein als üblich, um eine hohe Schlagbeständigkeit zu erzielen. Beim Schutz von scharfen Kanten bzw. von Kanten an Nähten und ihren jeweils benachbarten Bereichen ist üblicherweise auch ein höherer Korrosionsschutz erforderlich als sonst. In bestimmten Fällen kann es erforderlich sein, diese hochwertigen Eigenschaften auch bereits mit einer vergleichsweise dünnen Beschichtung zu erzielen.

Teile oder Bleche mit Partien, die gelötet oder geschweißt werden sollen. sind oft zuvor durch eine polymere Beschichtung, insbesondere durch mindestens eine Lackschicht wie ein Primer oder Klarlack, geschützt worden. Beim Löten oder Schweißen werden diese Beschichtungen im Bereich der dabei mit Temperatur beaufschlagten Partien, die im folgenden als "Lötstellen" bzw. "Schweißnähte" bezeichnet werden, auch wenn es sich um mindestens eine einzelne Schweißstelle handeln sollte, oft stark beschädigt. Es kommt zum sogenannten Abbrand. Aufgrund des Verbrennens von polymerem Material kann es im gelöteten bzw. geschweißten Bereich zu störenden Porositäten kommen. Außerdem werden diese angegriffenen Partien oft hinterher mechanisch bearbeitet, um den gelöteten bzw. geschweißten Bereich einzuebnen bzw. zu glätten, wobei die Partien mit beschädigter Beschichtung vielfach noch vergrößert werden. Es besteht daher Bedarf, Lötstellen, Schweißnähte bzw. beschädigte Partien der Beschichtung (sog. "sonstige Partien") nachträglich mit einer in ihrer Fläche begrenzten Schutzbeschichtung, die meistens über die beschädigten Partien ein wenig hinausragen soll, abzudecken. Eine solche Schweißnahtversiegelung bzw. Reparaturabdichtung ist insbesondere bei Komponenten aus Aluminiumlegierungen, Magnesiumlegierungen und Stahl von Interesse.

Weiterhin werden von den Stahlherstellern insbesondere Beschichtungsgemische gewünscht, die ein vollständiges Behandeln und Beschichten des anschließend an die Weiterverarbeiter gelieferten Stahls oder Stahlblechs ohne Unterbrechung in einer Produktionseinheit ermöglicht. Bis jetzt werden die Stahlbänder und -bleche beim Hersteller nach Beendigung des Walzprozesses generell verzinkt bzw., falls erwünscht, chromatiert und anschließend auf Rollen aufgewickelt. Die so erhaltenen Rollen des metallischen Bandes (Coils) werden dann zur Beschichtungseinheit transportiert, in der die Polymer-haltige Beschichtung aufgebracht wird. Das Transportieren zur Beschichtungseinheit sowie das Ab- und Aufwickeln der Rolle stellen unerwünschte, zu vermeidende Kostenfaktoren dar. Auch andere Arten von Reparaturstellen, z.B. an unvollständigen, unzureichenden oder/und zu dünnen polymeren Beschichtungen oder/und an nachgearbeiteten Partien, könnten hiermit geschützt werden.

Der Anmelderin ist bisher kein Einsatz eines Lackes oder einer lackähnlichen Beschichtung in einem automatisierten Verfahren bekannt, der auf Bändern, Blechen oder Formkörpern aufgebracht wird und nur dem Schutz der Kante bzw. der Naht dienen soll. Ein Schutz von Kanten und Nähten wird im Automobilbau bzw. Flugzeugbau insbesondere durch das Einspritzen von Hohlraumwachsen und die Verwendung von Dichtmassen oder Gummilippen genutzt.

Auch Beschichtungen z.B. aus einer Phosphatierung und einem Elektrotauchlack sind völlig unzureichend bezüglich ihres Korrosionsschutzes. Auch ein Ersatz für kathodischen Tauchlack bewährt sich nicht besser.

WO 01/46286 A1 offenbart Verfahren zur Herstellung von Beschichtungen aus thermisch und mit aktinischer Strahlung härtbaren Beschichtungsstoffen, die entsprechend den Beispielen sehr hohe Gehalte an organischen Lösemitteln enthalten. US 3,932,368, beschreibt Pulverlackzusammensetzungen.

Erwünscht ist ein UV-härtbares Beschichtungsgemisch, das es ermöglicht, die Vorbehandlung und das Beschichten mit einem Polymere enthaltenden Überzug in einer einzigen Produktionseinheit an einem Band, Blech oder Formteil durchzuführen (sogenanntes Inline-Verfahren), Dazu werden besondere Anforderungen an die Härtbarkeit des Beschichtungsgemisches gestellt. Die Verzinkung eines Stahlblechs wird generell bei Geschwindigkeiten ab ca. 60 m/min durchgeführt Um einen problemlosen Ablauf ohne Zwischenlagerung zu gewährleisten, muß die Beschichtung einschließlich der Härtung ebenfalls bei derartigen Geschwindigkeiten durchgeführt werden. Daher werden Beschichtungsgemische gewünscht, bei denen die erhaltene Schicht eine ausreichende Härte aufweist und die ggf. eine Beschichtung bei diesen hohen Geschwindigkeiten erlauben.

Die Aufgabe der vorliegenden Erfindung besteht darin, Verfahren zur Verfügung zu stellen, die ggf. auch ohne vorhergehende Chromatierung, Phosphatierung oder/und andersartige Oberflächenvorbehandlung im Bereich der Kanten, Lötstellen, Schweißnähte, Reparaturstellen oder/und Nähte eine hohe Korrosionsbeständigkeit und Haftfestigkeit ergeben. Ferner sollen diese Beschichtungsgemische für die Applikation auf schnellen Bandanlagen oder/und zum automatisierbaren Beschichten an Kanten oder/und Nähten von Blechabschnitten bzw. Formteilen geeignet sein. Diese Beschichtungsgemische sollen ferner möglichst arm an oder frei von Schwermetallen sein und evtl. auf Vorbehandlungsbeschichtungen aufgebracht werden können, die ggf. chromfrei sind.

Die Aufgabe wird gelöst mit einem Verfahren zum Herstellen eines polymeren, korrosionsschützenden Überzugs auf eine metallische Unterlage im Bereich einer Kante, einer Lötstelle, einer Schweißnaht, einer Reparaturstelle oder/und einer Naht, dadurch gekennzeichnet, dass man ein

Beschichtungsgemisch, das bis zu 2 Gew.-% an Wasser oder/und bis zu 2 Gew.-% an organischem Lösemittel, mindestens ein radikalisch polymerisierbares Bindemittel, mindestens eine bei Einwirkung von aktinischer Strahlung freie Radikale bildende Verbindung, 1 bis 60 Gew.-% bezogen auf die Trockensubstanz an Monomeren sowie Phosphorsäureester enthält, auf einen Teil der Oberfläche der metallischen Unterlage im Bereich einer Kante, einer Lötstelle, einer Schweissnaht, einer Reparaturstelle oder/und einer Naht, vorzugsweise auf einem Band, Blech bzw. Formteil im unbeschichteten bzw. im teilweise oder vollständig beschichteten Zustand aufbringt, wobei diese Beschichtung eine Metallschicht, metallische Legierungsschicht, Vorbehandlungsschicht oder/ und Lackschicht sein kann, dass man das polymere Gemisch ggf. trocknet und die aufgebrachte Beschichtung solange mit aktinischer Strahlung einer solchen Intensität bestrahlt, dass eine haftfest, zähelastische, korrosionsschützende Beschichtung gebildet wird.

Bevorzugte Ausführungsformen der Erfindung sind durch die abhängigen Ansrpüche umfasst.

Der Begriff "bei der aktinischen Bestrahlung" umfaßt auch die in kürzester Zeit abgeschlossene Aushärtung bei und unmittelbar nach dem Ende der
Bestrahlung. Unter aktinischer Strahlung ist solche Strahlung zu verstehen, deren Frequenzen bzw. Energie zur Aktivierung des Polymerisationsinitiators (= Photoinitiators) geeignet ist bzw. ausreicht. Sie sollte normalerweise mindestens die Energie bzw. die Frequenz des sichtbaren Lichts bzw. des UV-Lichts haben. Bevorzugt wird kurzwelliges sichtbares oder/und ultraviolettes Licht (UV-Licht). Naturgemäß ist jede Strahlung kürzerer Wellenlänge, also höherer Energie, ebenfalls geeignet. So kann z.B. auch Elektronenstrahlung eingesetzt werden, bei der kein Einsatz eines Photoinitiators erforderlich ist. Die durch die aktinische Strahlung ausgelösten chemischen Reaktionen werden auch als aktinische Härtung oder Vernetzung bzw. UV-Härtung bezeichnet, wobei UV-Härtung im Sinne dieser Anmeldung die Härtung bei jeder Art aktinischer Strahlung umfassen soll. Die aktinische Aushärtung erfolgt vorzugsweise im Temperaturbereich von 12 bis 185 °C, besonders bevorzugt bei 15 bis 140 °C, insbesondere bei Raumtemperatur.

Der Begriff "Kante" im Sinn dieser Anmeldung umfaßt insbesondere bei Bändern oder Blechen meistens zwei Kanten und die dazwischen liegende Fläche, die meistens durch ein Schneiden oder Stanzen erzeugt wird. Der Begriff "Kantenbereich" schließt darüber hinaus auch die angrenzenden Partien der oberen und unteren Oberfläche z.B. des Bleches ein. Hierbei erfolgt ein Umgriff über die in der Regel durch Schneiden oder Stanzen erzeugte Kantenfläche hinaus auf die beiden angrenzenden Bereiche der angrenzenden Oberflächen. Als "Naht" im Sinne dieser Anmeldung kann insbesondere eine Falznaht, eine Fuge, eine Spaltnaht oder ein Bereich auftreten, an dem mindestens zwei Abschnitte im wesentlichen parallel geführt werden und dort enden oder/und abgewinkelt werden, wodurch eine Öffnung, ein Spalt, eine Fuge oder ein Falz zwischen mindestens zwei Abschnitten gebildet wird, die oft besonders korrosionsgefährdet ist und meistens nicht z.B. durch Schweißen bzw. Löten geschlossen oder/und z.B. durch Wachs versiegelt ist. Die Naht kann gebildet werden durch mindestens einen im wesentlichen U-förmig oder/und im wesentlichen unvollständig geschlossen O-förmig ausgebildeten Abschnitt mindestens eines Bandes oder/und eines Bleches, wobei die weiteren Abschnitte beliebig geformt sein können und ggf. auch zusammengesteckt und ggf. auch gefügt sein können. Das Fügen kann hierbei vor allem durch Clinchen, Kleben, Löten oder/und Schweißen, vorwiegend durch Punktschweißen, erfolgen. Es können die unterschiedlichsten Formen an Falznähten, Fugen, Führungen, Säumen, Spaltnähten und Stiften, vorwiegend in Kleb-, Löt- und Schweiß-freien Verbindungstechniken, ausgebildet werden, die im Angelsächsischen z.B. mit Corner Slide Connection, Cup Clip, Drive Cleat, Hem, New England Cleat, Pittsburgh Lock, Standing S Cleat, Standing Seam oder Standing Slip bezeichnet werden. Im Deutschen können z.B. die Bezeichnungen Besäumung, Verbindung, Verkeilung, Verklammerung, Verriegelung bzw. Verschluß der Bördelung, Falznaht, Fuge, Kante, Naht, Rinne, Stoßstelle bzw. des Flansches oder Stoßes verwendet werden. Hierbei ist in der Regel zumindest die Kante oder/und ein Spalt einer solchen Verbindungstechnik unvollständig vor Korrosion geschützt.

Besonders bevorzugt ist es, gleichzeitig mindestens eine Kante und mindestens eine Naht wie z.B. am unteren Rand von Türen, insbesondere beim Automobil, zu schützen. Bei Automobiltüren ist häufig das äußere Blech nach innen umgebörtelt. Hierbei ist nicht nur die U-förmig umgebörtelte untere Kante, sondern auch der Verschluß der Naht am Auslauf des umgebörtelten Bleches zu schützen, da hier oft sehr starke Korrosionserscheinungen auftreten.

Vorzugsweise wird das Beschichtungsgemisch zum Aufbringen des polymeren Überzugs, das im folgenden oft als "polymeres Gemisch" oder als "Gemisch für einen polymeren Überzug" bezeichnet wird, nur mit einem Zusatz von Wasser oder von organischem Lösemittel, besonders bevorzugt nur mit einem Zusatz von Wasser und ganz besonders bevorzugt gänzlich ohne Zusatz von Wasser oder/und organischem Lösemittel hergestellt. Ohne Zusatz von Wasser bzw. von organischem Lösemittel enthält dieses Gemisch Wasser bzw. organisches Lösemittel nur in Spuren bzw. als Restbestandteil der bereits zugesetzten Rohstoffe bzw. aus der Feuchtigkeit der Atmosphäre. Dann liegen die Gehalte an Wasser bzw. organischem Lösemittel nicht über jeweils 2 Gew.-%, insbesondere bevorzugt nicht über jeweils 1,5 oder 1 oder 0,5 Gew.-%. Falls ein Zusatz von Wasser oder/und organischem Lösemittel gewünscht wird, empfiehlt es sich, vollentsalztes Wasser zuzusetzen.

In Gegenwart von nachvernetzenden Verbindungen kann bei Bedarf direkt hinter der UV-Station, hinter dem Bereich des aktinischen Aushärtens oder auch in größerem Abstand dahinter die thermische Aushärtung angeregt bzw. gestartet werden. Würde das Beschichtungsgemisch nicht vorher aktinisch ausgehärtet werden, kann das Beschichtungsgemisch in vielen Fällen sonst zu dünnflüssig werden und von dem metallischen Substrat herunterlaufen und die Kanten könnten nicht ausreichend abgedeckt werden.

Bei Bedarf kann die metallische Unterlage eine erhöhte Temperatur aufweisen, insbesondere eine Temperatur im Bereich von 20 bis 150 °C, vorzugsweise im Bereich von 20 bis 80 °C, besonders bevorzugt im Bereich von 25 bis 50 °C, um die Trocknung bzw. Resttrocknung des polymeren Überzugs z.B. von der Luftfeuchte bis zum Bestrahlen mit aktinischer Strahlung zu ermöglichen. Falls jedoch noch eine Mindestmenge an Wasser bzw. organischem Lösemittel im polymeren Überzug beim Beginn der aktinischen Bestrahlung vorhanden sein sollte, kann es leicht zur Bildung von Gasblasen und zum Aufbrechen oder/und Aufwerfen von Teilen des Überzugs (sog. Kocherbildung) kommen.

Vorzugsweise wird das polymere Gemisch durch erhöhte Gehalte an mindestens einem Photoinitiator, insbesondere im Bereich von 7 bis 15 Gew.-%, besonders reaktiv gestaltet, um eine schnelle und möglichst weitgehende Durchhärtung auch in dickeren Schichten zu erzielen. Alternativ kann die Strahlungsdosis erhöht werden oder ein reaktiveres radikalisch härtendes Polymer eingesetzt werden. Diese Maßnahmen können auch beliebig miteinander kombiniert werden. Dadurch wird schnell ein hoher Vernetzungsgrad erreicht, insbesondere auch eine Durchvernetzung.

Außerdem wird in vielen Einsatzzwecken eine hohe Trockenfilmschichtdicke verlangt. Wenn unmittelbar nach dem Auftrag des Beschichtungsgemisches im Kantenbereich aktinisch bestrahlt wird, kann die sich oft im Querschnitt tropfenähnlich ausbildende Beschichtung nicht stärker verlaufen und hat dann oft an den dicksten Stellen der oft tropfenähnlichen Beschichtung im Bereich von 50 µm bis 800 µm Dicke, wobei die Richtungen größter Dicke im Querschliff gemessen wurden.

Dieses Gemisch ist vorzugsweise weitgehend oder gänzlich frei von Chrom oder/und weiteren Schwermetallen wie z.B. Cadmium, Nickel, Kobalt oder/und Kupfer. Es ist üblicherweise auch frei von elektrisch gut leitenden Bestandteilen wie z.B. elektrisch leitfähigen Partikeln wie z.B. Zink, Ruß oder Eisenphosphid.

Das erfindungsgemäße Beschichtungsgemisch enthält ein radikalisch polymerisierbares Bindemittel, wobei der Gesamtgehalt insbesondere im Bereich von 15 bis 70 Gew.-% bezogen auf die Trockensubstanz liegen kann. Vorzugsweise liegt ihr Gesamtgehalt im Bereich von 20 bis 60 Gew.-%, besonders bevorzugt im Bereich von 28 bis 54 Gew.-%, ganz besonders bevorzugt im Bereich von 36 bis 50 Gew.-%, vor allem im Bereich von 40 bis 48 Gew.-%. Vorzugsweise liegt mindestens 40 Gew.-% des Gesamtgehalts dieser Bindemittel mit einem Molekulargewicht von mindestens 2000 vor, besonders bevorzugt mindestens 50 Gew.-%, ganz besonders bevorzugt mindestens 60 Gew.-%.

Als radikalisch polymerisierbare Verbindung können insbesondere Bindemittel auf Basis von Acrylat, Methacrylat, Epoxid, Polyester oder/und Urethan eingesetzt werden, insbesondere Epoxyacrylat, Polyesteracrylat, Urethanacrylat oder/und deren Gemische unterschiedlicher Basischemie oder/und unterschiedlicher Molekulargewichte. Bindemittel vorwiegend auf Basis von Epoxidharz können sich wegen der Ablösung der Beschichtung schlecht verhalten. Wenn jedoch Gemische mit einem Epoxidharzanteil verwendet werden, bei dem sich die Beschichtung nicht vom Untergrund ablöst, z.B. solche mit Urethanacrylat oder/und mit Polyesteracrylat, dann ist der Korrosionsschutz auch bedingt durch den Epoxidharzanteil sehr gut.

Das erfindungsgemäße Beschichtungsgemisch kann ggf. mindestens ein Bindemittel enthalten, das eine Nachvernetzung ermöglicht, wobei der Gesamtgehalt an der mindestens einen nachvernetzenden Verbindung dann insbesondere 0,3 bis 30 Gew.-% betragen kann bezogen auf die Trockensubstanz. Vorzugsweise liegt ihr Gesamtgehalt im Bereich von 1 bis 25 Gew.-%, besonders bevorzugt im Bereich von 1,5 bis 20 Gew.-%, ganz besonders bevorzugt im Bereich von 1,8 bis 15 Gew.-%. Daher ist es möglich, nur einen Teil der Vernetzung durch UV-Härtung zu bewirken und danach eine allmähliche, sich ggf. über etwa 12 Tage erstreckende Nachvernetzung zu bewirken. Die Nachvernetzung kann sich bei Raumtemperatur über einige Tage erstrecken und kann durch erhöhte Temperatur oder/und in Gegenwart eines Katalysators für die nachvernetzende Verbindung wie z.B. Dibutylzinnlaurat (DBTL) beschleunigt werden. Die Nachvernetzung kann bei Anwesenheit derartiger Bindemittel bei Raumtemperatur langsam erfolgen und zur weiteren Polymerisation beitragen. Bei erhöhter Temperatur erfolgt eine stärkere und schnellere Nachvernetzung. Falls jedoch verkappte Bindemittel eingesetzt werden, muß die Verkappung zuerst thermisch bei etwa mindestens 90 °C chemisch aufgebrochen werden, bevor die thermische Vernetzung erfolgen kann. Somit ist es mit verkappten nachvernetzenden Verbindungen möglich, die weitere Aushärtung zielstrebig zu einem späteren Zeitpunkt zu starten, soweit nicht vorher erhöhte Temperaturbelastungen auftreten. Beispiele für bevorzugte nachvernetzende Verbindungen umfassen Isocyanate und Isocyanurate, die üblicherweise als Härter bzw. Vernetzer wirken. Diese können z.B. auf der Basis von 2,4- bzw. 2,6-Toluoldiisocyanat (TDI), 4,4'-Methylendi(phenyl)isocyanat (MDI) oder Hexamethylendiisocyanat (HDI) beruhen. Vorzugsweise werden Isocyanate und Isocyanurate auf Basis von HDI oder/und TDI verwendet. Die nachvernetzenden Verbindungen reagieren mit den freien OH- und Polyol-Gruppen des UV-härtenden Harzes unter Bildung von Polyharnstoffen, die bekanntlich sehr beständige Verbindungen sind, und verwandten chemischen Verbindungen.

Neben den radikalisch härtenden Bindemitteln können geringe Gehalte an thermisch härtenden Bindemitteln wie z.B. ETL-Bindemittel enthalten sein. Der Gehalt an ETL-Bindemitteln macht jedoch nur Sinn, wenn verkappte nachvernetzende Verbindungen eingesetzt werden. Anderenfalls würden die Wirkungen der ETL-Bindemittel nicht ausreichend genutzt werden. Ein Zusatz von thermisch härtenden Bindemitteln ist nur bei Zusatz von mindestens einer verkappten nachvernetzenden Verbindung vorteilhaft, wenn auch thermisch härtende Bindemittel enthalten sind, da sonst die Reaktivität und die Vorteile des erfindungsgemäßen Beschichtungsgemisches nicht ausreichend oder in verschlechterter Form genutzt werden würden. Der Gehalt an rein thermisch härtenden Bindemitteln sollte vorzugsweise 20 Gew.-%, insbesondere 10 Gew.-%, bezogen auf die Trockensubstanz, nicht überschreiten.

Darüber hinaus sollte das erfindungsgemäße Beschichtungsgemisch keinen oder nur einen möglichst geringen Gehalt (zusammen nicht mehr als 5 Gew.-%) an Füller oder/und Pigment mit einer stärkeren oder starken Absorption im Spektralbereich der gewählten aktinischen Bestrahlung, insbesondere der UV-Strahlung, aufweisen. Deshalb ist üblicherweise nur der Zusatz eines geringen Gehalts an Korrosionsschutzpigment vorteilhaft. In vielen Fällen stört darüber hinaus auch die für das Auge sichtbare Farbgebung bzw. Absorption vieler Pigmente.

Das erfindungsgemäße Beschichtungsgemisch enthält eine bei Einwirkung von aktinischer Strahlung freie Radikale bildende Verbindung (sog. Photoinitiator), wobei der Gesamtgehalt an freie Radikale bildenden Verbindungen insbesondere im Bereich von 3 bis 15 Gew.-% betragen kann bezogen auf die Trockensubstanz. Vorzugsweise liegt ihr Gesamtgehalt im Bereich von 4 bis 11 Gew.-%, besonders bevorzugt im Bereich von 5 bis 10 Gew.-%, ganz besonders bevorzugt im Bereich von 6 bis 9 Gew.-%. Bei Einwirkung von aktinischer Strahlung, insbesondere von UV-Strahlung, bildet der mindestens eine Photoinitiator freie Radikale aus, die mit dem radikalisch polymerisierbaren Bindemittel reagieren und dieses bei der und ggf. kurz nach der aktinischen Bestrahlung unvollständig oder vollständig vernetzen. Die radikalisch polymerisierbaren Verbindungen haben ungesättigte polymerisierbare Gruppen, die mit den strahlungsinitiiert aus den Photoinitiatoren entstehenden Gruppen reagieren und ein wasserunlösliches Netzwerk bilden können. Nach dieser chemischen Reaktion kann dieses Bindemittel ggf. noch reaktive Gruppen wie OH- und Polyol-Gruppen aufweisen, die die chemische Beständigkeit und die Korrosionsbeständigkeit der hieraus gebildeten Beschichtung begrenzen können.

Das erfindungsgemäße Beschichtungsgemisch enthält mindestens ein Monomer, wobei der Gesamtgehalt an Monomeren im Bereich von 1 bis 60 Gew.-% liegt bezogen auf die Trockensubstanz. Vorzugsweise liegt ihr Gesamtgehalt im Bereich von 10 bis 50 Gew.-%, besonders bevorzugt im Bereich von 15 bis 45 Gew.-%, ganz besonders bevorzugt im Bereich von 20 bis 40 Gew.-%. Die Monomere haben die Aufgabe, das Beschichtungsgemisch möglichst dünnflüssig zu gestalten, ohne daß deshalb Wasser oder/und organisches Lösemittel zugesetzt werden muß, und werden daher auch als Reaktivverdünner bezeichnet. Als Monomere sind vor allem solche geeignet, die nach der Aushärtung möglichst wasserfest sind, die besonders reaktiv mit dem radikalisch polymerisierbaren Bindemittel und mit dem Photoinitiator reagieren, die den Film nicht spröder gestalten oder/und die eine gute Haftung zum Untergrund gewähren. Das Molekulargewicht der Monomere liegt vorteilhafterweise im Bereich bis zu 500. Bevorzugte Arten an Monomeren sind solche auf Basis von Acrylat oder/und von Methacrylat. Besonders bevorzugt sind Hydroxypropylmethacrylat-Monomer (HPMA), Isobornylacrylat-Monomer und Hexandioldiacrylat-Monomer (HDDA). Die Monomere können mono- oder difunktionell sein, wobei monofunktionelle Monomere die Elastizität meistens nicht negativ beeinflussen. Anstelle von Monomer(en) kann teilweise oder gänzlich Wasser oder/und organisches Lösemittel zugesetzt werden.

Das erfindungsgemäße Beschichtungsgemisch enthält einen Haftungsverbesserer, wobei der Gesamtgehalt an Haftungsverbesserern insbesondere im Bereich von 0,1 bis 25 Gew.-% liegen kann bezogen auf die Trockensubstanz. Vorzugsweise liegt ihr Gesamtgehalt im Bereich von im Bereich von 5 bis 20 Gew.-%, besonders bevorzugt im Bereich von 6 bis 17 Gew.-%, ganz besonders bevorzugt im Bereich von im Bereich von 7 bis 14 Gew.-%. Als Haftungsverbesserer werden Phosphorsäureester eingesetzt. Sie dienen dazu, bei niedrigem pH-Wert auf dem Untergrund einen Beizangriff vorzunehmen und dadurch für eine bessere Verankerung der nachfolgenden Schicht sorgen.

Das erfindungsgemäße Beschichtungsgemisch kann mindestens ein Korrosionschutzpigment enthalten, wobei der Gesamtgehalt an Korrosionsschutzpigment insbesondere im Bereich von 0,1 bis 15 Gew.-% liegen kann bezogen auf die Trockensubstanz. Vorzugsweise liegt ihr Gesamtgehalt im Bereich von 1 bis 12 Gew.-%, besonders bevorzugt im Bereich von 2 bis 10 Gew.-%, ganz besonders bevorzugt im Bereich von 3 bis 8 Gew.-%. Als Korrosionsschutzpigmente können insbesondere solche auf Basis von Oxid, Phosphat, Phosphid oder/und Silicat eingesetzt werden. Silicatische Pigmente sind besonders bevorzugt, weil sie die Wasserstoffionen im Beschichtungsgemisch puffern und lassen dadurch erst keine Korrosion beginnen.

Das erfindungsgemäße Beschichtungsgemisch kann mindestens ein Gleitmittel wie z.B. Graphit oder/und Polyethylenwachs enthalten, wobei der Gesamtgehalt an Gleitmittel insbesondere im Bereich von 0,05 bis 5 Gew.-% liegen kann bezogen auf die Trockensubstanz. Vorzugsweise liegt ihr Gesamtgehalt im Bereich von 0,2 bis 4 Gew.-%, besonders bevorzugt im Bereich von 0,5 bis 3 Gew.-%, ganz besonders bevorzugt im Bereich von 0,8 bis 2,5 Gew.-%. Ein Zusatz von Gleitmittel ist oft nur dann anzuraten, wenn die derart behandelten Oberflächen nachträglich umgeformt, aber nicht verklebt werden sollen.

Das erfindungsgemäße Beschichtungsgemisch kann mindestens eines der nachfolgend genannten Additive enthalten wie z.B. Thixotropiehilfsmittel, Entschäumer, Oberflächenadditive zur Erhöhung der Kratzfestigkeit, Additive zur Untergrundbenetzung wie insbesondere zur Haftung auf Elektrotauchlackschichten oder auf Elektrotauchlackersatzschichten, Haftungsverbesserer z.B. zur Haftung auf metallischem Untergrund, auf Elektrotauchlackschichten oder auf Elektrotauchlackersatzschichten wie z.B. Phosphorsäureester, wobei der Gesamtgehalt an derartigen Additiven insbesondere im Bereich von 0,05 bis 10 Gew.-% liegen kann bezogen auf die Trockensubstanz. Vorzugsweise liegt ihr Gesamtgehalt im Bereich von 0,3 bis 8 Gew.-%, besonders bevorzugt im Bereich von 1 bis 6 Gew.-%, ganz besonders bevorzugt im Bereich von 2 bis 5 Gew.-%. Ein Entschäumer dient dazu, daß möglichst keine Luftbläschen in der aufgebrachten Beschichtung eingeschlossen werden und somit keine Poren in ihr ausgebildet werden. Der Benetzer sorgt für eine Haftungsverbesserung zum Untergrund.

Das erfindungsgemäße Beschichtungsgemisch ist vorzugsweise frei von farbgebenden Bestandteilen und wird dann nur einen schwachen oder keinen Farbton, auch als gehärteter polymerer Überzug, aufweisen. Es ist bevorzugt, einen möglichst farblosen, klaren oder zumindest transparenten polymeren Überzug zu erzeugen.

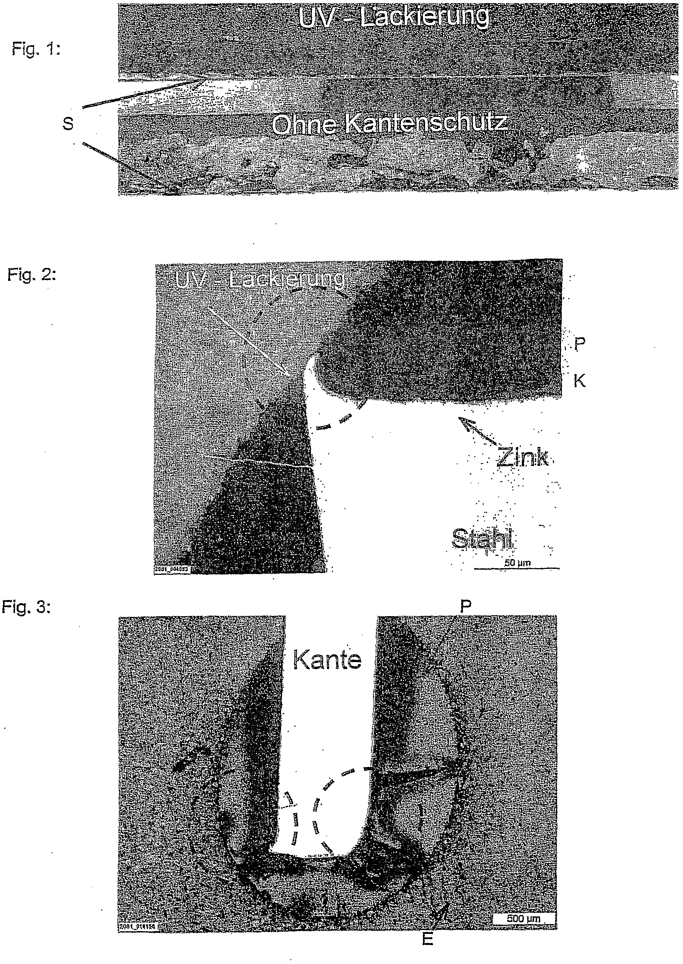

Als organische Lösemittel sind insbesondere kennzeichnungsfreie dünnflüssige Lösemittel bevorzugt bzw. Ester, Ketone, Glykolether und aromatische Kohlenwasserstoffe wie z.B. Xylol geeignet, insbesondere Propylenglykolether. Vorzugsweise haben sie eine gut verdünnende Eigenschaft für die Bindemittel und sind leichtflüchtig. Ein derartiger Gehalt kann, insbesondere wenn er etwas höher ist, den vorteilhaften Effekten des Beschichtungsgemisches und den vorteilhaften Eigenschaften des erfindungsgemäßen Verfahrens entgegenwirken. Die Viskosität ist grundsätzlich auch mit Wasser bzw. organischem Lösemittel beliebig einstellbar. Dennoch ist es in vielen Fällen bevorzugt, die Viskosität zumindest zum Teil durch den Gehalt und die Art des Monomers bzw. der Monomere einzustellen. Der Einstellung der Viskosität kommt besonders beim Schutz von Kanten eine besondere Bedeutung bei, damit das Beschichtungsgemisch einerseits aufgrund ihrer zu hohen Viskosität nicht ungleichmäßig geformt aufgebracht wird und andererseits aufgrund ihrer zu geringen Viskosität von der Kante und insbesondere von den mitzuschützenden Graten abläuft und zu dünne oder partiell vielleicht sogar unvollständig geschlossene polymere Überzüge herstellen läßt (siehe Figur 2).

Das erfindungsgemäße Beschichtungsgemisch kann eine Viskosität im Bereich von 1.000 bis 60.000 mPa•s aufweisen. Die Viskosität liegt vorzugsweise im Bereich von 2.000 bis 50.000 mPa•s, besonders bevorzugt im Bereich von 2.500 bis 40.000 mPa•s. Aufgrund der meistens vergleichsweise hohen Viskosität, wie sie für den Schutz der Kanten bevorzugt ist, ist es nicht mehr möglich, das erfindungsgemäße Beschichtungsgemisch im industriellen Maßstab gleichmäßig und eben auf großen Flächen aufzutragen. Hierbei werden höhere Werte der Viskosität insbesondere beim Raupenauftrag gewählt, vorzugsweise solche im Bereich von 30.000 bis 50.000 mPa•s. Andererseits werden geringere Werte der Viskosität insbesondere beim Pinselauftrag gewählt, vorzugsweise solche im Bereich von 1.000 bis 10.000 mPa•s. Bei Viskositäten im Bereich von 1.000 bis 2.500 mPa•s besteht jedoch die Gefahr, daß die aufgebrachte Schicht schnell verläuft, nur eine dünne Naßfilmschicht ausbildet und aufgrund der dann üblicherweise enthaltenen erhöhten Lösemittelgehalte auch eine erhöhte Trockenschwindung aufweist, so daß die Trockenfilmschichtdicke dadurch noch viel geringer ausfällt. Gerade vorspringende Partien und Grate können dann besonders dünne oder sogar partiell fehlende und dann u.U. unzureichend korrosionsschützende polymere Überzüge aufweisen. Beschichtungsgemische mit Viskositäten im Bereich von 1.000 bis 2.000 mPa•s können meistens nicht für den Schutz von Kanten eingesetzt werden und auch nicht für jede Nahtabdichtung. Sie eignen sich jedoch u.U. für kleine Ausbesserungsarbeiten bei Lackfehlern oder Stellen der Nacharbeit. Für das Spritzen, Sprühen bzw. Walzen werden insbesondere Werte der Viskosität im Bereich von 20.000 bis 40.000 mPa•s genutzt. Aufgrund der vergleichsweise hohen Viskosität für den Einsatz an der Kante oder als Nahtabdichtung, ohne daß ein Spalt verfüllt wird, ist ein solches erfindungsgemäßes Beschichtungsgemisch nicht für den großflächigen Auftrag geeignet. Es kann jedoch auch in kleinflächigen Partien für Ausbesserungsarbeiten eingesetzt werden. Die Viskosität ist in Verbindung mit der Benetzung teilweise recht genau auf die jeweiligen Einsatzbedingungen einzustellen, damit das Beschichtungsgemisch nicht an vorstehenden Partien wie Ecken und Graten zu dünn verläuft oder sich sogar partiell zurückzieht. Für den Kantenschutz wird daher neben einem guten Umgriff um die Kante oft eine besonders gute Benetzung, also eine möglichst niedrige Oberflächenspannung, benötigt. Eine schnelle Aushärtung nach der Beschichtung mit dem erfindungsgemäßen Beschichtungsgemisch ist vorteilhaft, um nachträgliche Veränderungen oder Beschädigungen der noch nicht ausgehärteten Beschichtung zu vermeiden.

Bänder und Bleche zeigen häufig eine Schichtdicke im Bereich von 0,05 bis 3 mm Dicke, insbesondere im Bereich von 0,1 bis 2 mm Dicke.

Auch wenn grundsätzlich jede Art einer metallischen Unterlage und Unterlagen aus jeder metallischen Zusammensetzung genutzt werden können, handelt sich hierbei vorzugsweise um Bänder, Bleche bzw. Formteile aus Aluminium, aus einer Aluminiumlegierung, aus einer Magnesiumlegierung, aus Stahl oder/und aus einem metallisch beschichteten Band bzw. Blech. Als Stahlqualität wird insbesondere kaltgewalzter Stahl (CRS) oder tiefgezogener Stahl verwendet. Die metallische Beschichtung der metallischen Unterlage kann insbesondere eine sein auf Basis von AISi-, ZnAI- wie Galfan®, AlZn- wie Galvalume®, ZnFe-, ZnNiwie Galvanneal® und anderen Al-Legierungen bzw. Zn-Legierungen. Die metallische Beschichtung kann durch Beschichten mit einer Schmelze wie z.B. als Feuerverzinkung, die insbesondere durch Eintauchen erzeugt wird, oder in einem wässerigen Bad durch elektrochemische Prozesse galvanisch erfolgen. Hierbei kann die metallische Unterlage insbesondere mit einer Zink-haltigen Legierung elektrolytisch verzinkt (ZE) oder feuerverzinkt (Z) worden sein. Jede Art Beschichtung, auch die erfindungsgemäße, kann grundsätzlich auf einer oder auf beiden Seiten des metallischen Bandes oder Bleches erfolgen.

Falls statt des aktinisch härtenden polymeren Gemisches ein Pulverlack eingesetzt werden würde, müßte dieser Lack über relativ lange Zeit - meist über 10 bis 30 Minuten - und meist bei Temperaturen im Bereich von 120 bis 180 °C eingebrannt werden, was oft zu einem zu harten Überzug und zu einer ganzflächigen Beschichtung des Substrats führen würde und leicht dazu führt, daß sich der flüssige Lack beim Einbrennen an Graten und vorspringenden Partien aufgrund der Oberflächenspannung wieder zurückzieht und einen Teil der Grate freilegen würde.

Als Grat im Sinne dieser Anmeldung werden hierbei insbesondere Schnittgrate und Stanzgrate verstanden, die beim Stanzen, Schneiden, Verformen usw. im Kantenbereich auftreten können. Diese Grate stehen, vor allem beim Schneiden und insbesondere dann, wenn die Werkzeuge wie z.B. eine Schlagschere schon etwas oder stärker verschlissen sind, u.U. bis zu etwa 100 µm vor bzw. ragen oft im gebogenen Zustand bis zu etwa 1 mm aus der metallischen Unterlage heraus. Die Länge der Grate kann beliebig schwanken.

Bei der Verwendung eines Lackes mit einem hohen Anteil an Wasser oder/und organischem Lösemittel, insbesondere bei einem Anteil an Wasser oder/und organischem Lösemittel von insgesamt mehr als 5 oder 10 Gew.-% bezogen auf die Trockensubstanz, kann sich teilweise die Gefahr einstellen, daß ein Teil der Grate aufgrund der Oberflächenspannung des aufgebrachten Beschichtungsgemisches freigelegt wird. Außerdem hat ein hoher Anteil an Wasser oder/und organischem Lösemittel den Nachteil, daß diese Bestandteile nicht immer schnell genug entweichen und die anschließende aktinische Härtung stark beeinträchtigen können.

Dagegen zeigt ein polymeres Gemisch, das mittels aktinischer Strahlung teilweise, weitgehend oder vollständig ausgehärtet wird, meistens nur eine Volumenschwindung im Bereich von 1 bis 5 %. Dies trägt auch dazu bei, daß die Grate nicht so leicht freigelegt werden können und daß im Inneren des Lacks nicht so leicht stärkere Spannungen aufgebaut und Risse ausgebildet werden können.

Es ist besonders bevorzugt, das erfindungsgemäße Verfahren automatisiert einzusetzen. Hierbei kann einerseits eine Beschichtung an einer Bandanlage erfolgen, andererseits aber auch eine Beschichtung entlang den Kanten, Lötstellen, Schweißnähten, Reparaturstellen bzw. Nähten von Blechen bzw. Formteilen z.B. in einem Streifen vorgegebener Breite. Die Beschichtung des Kantenbereichs kann auch dadurch erfolgen, daß ein Stapel an Blechen oder Formteilen mit einem Abstand von Blech zu Blech bzw. von Formteil zu Formteil oder ein Coil (Bandrolle), bei dem das Band auf Abstand gehalten wird, von einer Seite aus beschichtet werden kann und von dieser Seite aus auch aktinisch bestrahlt oder/und aufgeheizt werden kann.

Bei dem erfindungsgemäßen Verfahren kann die metallische Unterlage eine Oberfläche im wesentlichen bestehend aus Aluminium, Stahl oder/und einer Aluminium, Eisen, Magnesium, Titan oder/und Zink enthaltenden Legierung aufweisen, wobei diese Oberfläche noch zusätzlich mit mindestens einer Vorbehandlungsschicht versehen sein kann. Diese Vorbehandlungsschicht kann dann u.a. eine Beschichtung auf Basis von Phosphat, insbesondere auf Basis von ZnMnNi-Phosphat, oder auf Basis von Phosphonat, Silan oder/und einem Gemisch auf Basis von Fluoridkomplex, Korrosionsinhibitor, Phosphat, Polymer oder/und fein verteilten Partikeln sein. Die bislang am häufigsten eingesetzten Verfahren zur Oberflächenbehandlung bzw. Vorbehandlung vor der Lackierung von Metallen, insbesondere von Metallband, basieren auf dem Einsatz von Chrom(VI)-Verbindungen oder/und Phosphat(en) ggf. zusammen mit mindestens einem von diversen Zusatzstoffen.

Aufgrund der toxikologischen und ökologischen Risiken, die derartige Verfahren mit sich bringen und darüber hinaus aufgrund der absehbaren gesetzlichen Einschränkungen bezüglich der Anwendung von Chromat-haltigen Verfahren wird schon seit längerer Zeit nach Alternativen zu diesen Verfahren auf allen Gebieten der Metalloberflächenbehandlung gesucht. Daher sind die Vorbehandlungslösung(en) und die daraus gebildete Beschichtung(en) vorzugsweise chromfrei. Aktivierungslösungen, Passivierungslösungen bzw. Nachspüllösungen werden hierbei im Sinne dieser Anmeldung ebenfalls als Vorbehandlungslösung bezeichnet; Beschichtungen einer Aktivierungslösung, einer Passivierungslösung bzw. einer Nachspüllösung werden hierbei ebenfalls als Vorbehandlungsschicht bzw. als Vorbehandlung bezeichnet. Außerdem ist bevorzugt, die Gehalte an Schwermetallen dieser Lösungen bzw. Beschichtungen möglichst gering zu halten oder gänzlich zu vermeiden, insbesondere Gehalte an Kobalt, Kupfer oder/und Nickel, die wegen ihrer Vorteile heute oft in geringen oder gewissen Gehalten verwendet werden.

Bei dem erfindungsgemäßen Verfahren kann die metallische Unterlage (zusätzlich) mit mindestens einer Vorbehandlungsschicht, mit mindestens einer Lackschicht oder/und mindestens einer Lack-ähnlichen Schicht überzogen werden, bevor das erfindungsgemäße polymere Gemisch aufgebracht wird. Vorteilhafterweise kann diese Lackschicht oder/und Lack-ähnliche Schicht derart zusammengesetzt sein, daß sie viele elektrisch leitfähige Partikel oder Bestandteile enthält. Insbesondere bei Lötstellen oder Schweißnähten bzw. bei der Nahtabdichtung kann es daher vorteilhaft sein, einen sog. Schweißprimer aufzubringen, bevor das erfindungsgemäße Beschichtungsgemisch aufgetragen wird.

Hierbei kann die metallische Unterlage, die ggf. bereits beschichtet ist, auch im Bereich der Kante oder/und der Naht auf jeder Seite der Kante und über die Kante bzw. entlang der Naht und über die Naht vorzugsweise in einer Breite von jeweils 0,5 bis 20 mm von der Kante bzw. Naht aus - üblicherweise nach beiden Seiten - mit einem polymeren Überzug beschichtet werden, wobei die Kante roh oder beschichtet sein kann, wobei jene erste Beschichtung aus jeweils mindestens einer Schicht einer Vorbehandlungslösung, eines Lackes oder/und einer Lack-ähnlichen Schicht bestehen kann. Auch bei einer Lötstelle, einer Schweißnaht bzw. einer Reparaturstelle ist es vorteilhaft, die erfindungsgemäße Beschichtung an jedem Rand vorzugsweise in dieser Breite überstehen zu lassen.

Bei dem erfindungsgemäßen Verfahren kann die metallische Unterlage, die ggf. bereits beschichtet ist, im Bereich der Naht, wo sich ein Hohlraum wie z.B. ein Spalt befindet, mit einem dünnflüssigeren Beschichtungsgemisch verschlossen und ggf. geringfügig verfüllt werden, wobei das Beschichtungsgemisch hierbei vorzugsweise eine Viskosität im Bereich von 1.000 bis 20.000 mPa•s, vorzugsweise von 2.500 bis 15.000 mPa•s, aufweist, gemessen mit einem Kegel-Platte-Viskosimeter bei Raumtemperatur im bewegten Zustand. Geringe Viskositäten, insbesondere im Bereich von 1.000 bis 8.000 mPa•s, sind zur Nahtabdichtung gut geeignet, da sie ggf. auch Spalte etwas benetzen können. Außerdem ist ein thixotropes Verhalten dieses Beschichtungsgemisches wegen der Viskositätsunterschiede im bewegten zum unbewegten Zustand besonders vorteilhaft, weil ein im bewegten Zustand vergleichsweise dünnflüssiges Beschichtungsgemisch bei fehlender Bewegung in der aufgetragenen Form erhalten bleibt. Aufgrund der Thixotropie zieht sich eine Kantenschutzbeschichtung nicht flächig auf die großen Flächen des beschichteten Bleches zurück und es kommt auch nicht leicht zu einer Annäherung der Kanten der Schnittfläche des Bleches an den Rand des Beschichtungsgemisches. Hierdurch läßt sich gewährleisten, daß auch die oft hervorstehenden Kanten der Schnittfläche noch in größerer Dicke mit dem erfindungsgemäßen Beschichtungsgemisch überzogen bleiben und in diesem Zustand gehärtet werden. Für Trockenfilmdicken des erfindungsgemäßen Überzugs ist es vorteilhaft, wenn das erfindungsgemäße Beschichtungsgemisch besonders reaktiv gestaltet wird, wodurch gegebenenfalls auch die Haftfestigkeit weiter verbessert werden kann.

Dabei kann vor dem Aufbringen des Beschichtungsgemisches für einen polymeren Überzug ein Elektrotauchlackersatz z.B. durch Aufwalzen oder ein Elektrotauchlack und ggf. vorher auch eine Vorbehandlung wie z.B. eine Phosphatierung aufgetragen werden. Die Schnittkante wird hierbei oft phosphatiert und insbesondere mit einem kathodischen Tauchlack (KTL) beschichtet. Bei Verwendung von einem Elektrotauchlackersatz (z.B. dem sog. "KTL-Ersatz"), der üblicherweise nicht durch Tauchen des zu beschichtenden Gegenstandes in ein Bad zur elektrisch geladenen Abscheidung des Lackes getaucht wird, wird jedoch normalerweise die rohe Schnittkante ohne vorherige Beschichtung mit einer Vorbehandlungslösung mit dem Beschichtungsgemisch zur Ausbildung des polymeren Überzugs z.B. als Kantenschutz bzw. als Nahtabdichtung behandelt, und danach wird die so beschichtete Unterlage ggf. flächig verklebt oder/und gefügt. Die Schnittkanten bieten dabei jedoch regelmäßig starke Korrosionsprobleme und führen so regelmäßig zu starker Lackunterwanderung (siehe Figur 1).

Die metallische Unterlage, die vorzugsweise bereits mindestens zwei Lackschichten aufweist, kann geschnitten, gestanzt oder/und gebörtelt werden, bevor das Beschichtungsgemisch für den polymeren Überzug aufgebracht wird.

Die metallische Unterlage kann jedoch alternativ auch zuerst geschnitten, gestanzt oder/und gebörtelt werden, danach u.U. alkalisch oder/und sauer gereinigt bzw. gebeizt werden, dann evtl. mit mindestens einer Vorbehandlungslösung wie z.B. auf Basis von Fluorid oder/und Phosphat beschichtet werden, bevor das Beschichtungsgemisch für den polymeren Überzug aufgebracht wird.

Wenn das erfindungsgemäße Beschichtungsgemisch Wasser oder/und organisches Lösemittel enthält, ist es empfehlenswert, die metallische Unterlage vor dem Beschichten mit dem Beschichtungsgemisch für den polymeren Überzug auf Temperaturen im Bereich von 10 bis 120 °C PMT zu erwärmen, vorzugsweise auf Temperaturen im Bereich von 25 bis 100 °C, oder auf Temperaturen in diesem Temperaturbereich zu halten, falls die metallische Unterlage bereits erhöhte Temperatur aufweist.

Grundsätzlich kann man die Oberfläche der metallischen Unterlage mit dem Beschichtungsgemisch für den polymeren Überzug im Temperaturbereich von - 20 bis 180 °C PMT überziehen.

Das Beschichten mit dem erfindungsgemäßen Beschichtungsgemisch erfolgt grundsätzlich stromlos, so daß keine kathodische oder anodische Abscheidung erfolgt. Die Zusammensetzung des erfindungsgemäßen Beschichtungsgemisches ist auch nicht auf die elektrophoretische Abscheidung ausgelegt. Sie ist daher vom elektrischen Widerstand des Beschichtungsgemisches oder/und den elektrischen Eigenschaften ihrer Bestandteile nicht ausreichend für die Verwendung als Elektrotauchlack geeignet.

Bei dem erfindungsgemäßen Verfahren kann man die Oberfläche der metallischen Unterlage mit dem Beschichtungsgemisch für den polymeren Überzug durch Aufpinseln, Gießen, Raupenauftrag, Spritzen, Sprühen, Tauchen oder/und Walzen ggf. unter Verwendung eines Rakels überziehen, wobei ggf. auch im Unterdruck gearbeitet werden kann. Beim Beschichten des Bereichs einer Kante erfolgt der Auftrag des Beschichtungsgemisches vorzugsweise durch Gießen ohne oder mit Rakel, durch Raupen- oder/und Pinselauftrag. Beim Beschichten des Bereichs einer Naht, einer Lötstelle, einer Schweißnaht bzw. einer Reparaturstelle erfolgt der Auftrag des Beschichtungsgemisches vorzugsweise durch Gießen ohne oder mit Rakel, durch Raupenauftrag, Spritzen oder/und Sprühen. Gegebenenfalls wird eine Reparaturstelle manuell ausgebessert. Beim Beschichten eines Bandes erfolgt der Auftrag des Beschichtungsgemisches vorzugsweise durch Spritzen, Sprühen oder/und Walzen. Beim Beschichten eines Bleches oder eines Formteils erfolgt der Auftrag des Beschichtungsgemisches vorzugsweise durch Gießen ohne oder mit Rakel, durch Raupenauftrag, Spritzen oder/und Sprühen. Eine Raupe kann direkt nach dem Auftrag eine maximale Dicke insbesondere im Bereich von 20 bis 1000 µm aufweisen und kann ggf. sofort oder/und später, insbesondere beim Erhöhen der Temperatur, verlaufen. Hierbei kann insbesondere für die Kantenbeschichtung ggf. eine Düse verwendet werden, deren Düsendurchmesser im Bereich der halben bis eineinhalbfachen Dicke des Substrates (Blechdicke) liegt, vorzugsweise ein Düsendurchmesser der 0,5- bis 1,5-fachen Substratdicke, vorzugsweise der 0,8- bis 1,2-fachen Substratdicke. Diese Düse kann jedoch auch als länglich ausgeprägte Düse oder als Schlitzdüse ausgebildet sein.

Dem Entstehen von Gasblasen kann durch Arbeiten mit Unterdruck, durch Zusatz eines Entschäumers oder/und Einstellen einer niedrigen Viskosität entgegengewirkt werden. Zusätzlich kann das Beschichtungsgemisch ggf. beim Abfüllen oder/und kurz vor dem Auftragen vakuumentlüftet werden.

Das Beschichtungsgemisch für den polymeren Überzug kann eine Viskosität im Bereich von 1.000 bis 60.000 mPa•s aufweisen. Die Viskosität kann hierbei - vor allem im Bereich von 2.500 bis 6.000 mPa•s - insbesondere durch den Gehalt an Monomeren oder/und - vor allem im Bereich von 4.000 bis 60.000 mPa•s - an Kieselsäure bzw. an ähnlichem Pigment eingestellt werden, aber bei wasserhaltigen Gemischen auch durch Änderung des pH-Werts wie z.B. durch Zugabe einer Säure wie Phosphorsäure oder Phosphorsäureester. Besonders vorteilhaft zur Beschichtung von Kanten mit hervorstehenden Graten, insbesondere von Schnittgraten, ist ein polymeres Gemisch, das ein thixotropes Verhalten zeigt, so daß das Stehvermögen auf der Kante erhöht wird, weil das polymere Gemisch nur bei Bewegung dünnflüssig ist. Das thixotrope Verhalten kann durch Zusatz z.B. von Kieselsäure bzw. ähnlichem Pigment oder/und durch Zusatz eines Thixotropiehilfsmittels erreicht werden. Dadurch kann der Bereich um eine Kante bzw. um eine Naht mit einem deutlich gleichmäßigeren Film überzogen werden und eine vollständige Bedeckung mit dem polymeren, korrosionsschützenden Überzug auf rohen Kanten gewährleistet werden. Die Trockenfilmschichtdicke sollte dabei an den scharfen Kanten vorzugsweise mindestens 20 µm betragen, um eine ausreichende Korrosionsbeständigkeit zu erzielen.

Bei dem erfindungsgemäßen Verfahren kann ein metallisches Band bei einer Bandlaufgeschwindigkeit insbesondere im Bereich von 30 bis mindestens 220 m pro Minute beschichtet werden, wobei die Auftragsvorrichtung für das Beschichtungsgemisch oder/und die Vorrichtung zur aktinischen Bestrahlung des polymeren Überzugs ortsfest gehalten werden kann/können. Heute werden viele Bandanlagen mit einer Geschwindigkeit im Bereich von 40 bis 130 m/min betrieben. Es ist jedoch absehbar, daß etliche Anlagen zukünftig mit einer Geschwindigkeit im Bereich von 80 bis 200 m/min, insbesondere im Bereich von 100 bis 180 m/min betrieben werden werden. Die Steigerung der Geschwindigkeit z.B. über 120 m/min hinaus setzt dabei die sichere Erfüllung der besonders großen Anforderungen an die Anlage, an die Automatisierung des Verfahrens, an die Qualität der für das Beschichten eingesetzten Gemische und an die Prozeßsicherheit voraus.

Alternativ kann die metallische Unterlage, insbesondere ein Blech oder Formteil, mit einer Geschwindigkeit im Bereich von 0,01 bis 200 m pro Minute bewegt werden, wobei die Auftragsvorrichtung für das Beschichtungsgemisch oder/und die Vorrichtung zur aktinischen Bestrahlung des polymeren Überzugs ortsfest gehalten werden können.

Umgekehrt kann hierbei aber auch die metallische Unterlage ortsfest gehalten werden, und die Auftragsvorrichtung für das Beschichtungsgemisch oder/und die Vorrichtung zur aktinischen Bestrahlung des polymeren Überzugs, insbesondere jeweils als automatisierte Vorrichtung, können mit einer Geschwindigkeit im Bereich von 0,01 bis 200 m pro Minute bewegt werden.

Bei dem erfindungsgemäßen Verfahren können die Auftragsvorrichtung für das Beschichtungsgemisch und die Vorrichtung zur aktinischen Bestrahlung des polymeren Überzugs miteinander gekoppelt sein, insbesondere auf gleichem Abstand gehalten bzw. geführt werden.

Vorteilhafterweise kann man hierbei den polymeren Überzug nach dem Aufbringen auf Temperaturen erwärmen, die gegenüber der Temperatur der metallischen Unterlage beim Aufbringen des polymeren Überzugs um 1 bis 60 °C höher liegen, um den polymeren Überzug verlaufen zu lassen.

Dabei kann man den polymeren Überzug unmittelbar nach dem Aufbringen oder später, insbesondere nach einer Trocknung, mit aktinischer Strahlung bestrahlen.

Die mit dem polymeren, teilweise ausgehärteten Überzug beschichtete Unterlage kann anschließend auf Temperaturen im Bereich von 80 bis 180 °C erhitzt werden, um in Gegenwart von mindestens einer nachvernetzenden Verbindung die Nachvernetzungsreaktion auszulösen und thermisch auszuhärten. Hierbei können für das Auslösen der Reaktion und für das Aushärten unterschiedliche Temperaturen verwendet werden.

Das erfindungsgemäße Verfahren sollte so eingesetzt werden, daß mit dem polymeren Überzug alle Grate der Schnittkante überdeckt werden. Daß es gut möglich ist, alle Grate mit dem polymeren Überzug zu versehen, ohne daß das Beschichtungsgemisch von den Graten zumindest teilweise wegläuft, war überraschend.

Der erfindungsgemäße Überzug bzw. das erfindungsgemäße Verfahren kann auch zum Beschichten einer Lötstelle, einer Schweißnaht oder/und einer Reparaturstelle eingesetzt werden. Dies kann insbesondere bei Lötstellen und Schweißnähten vor dem Beschichten mit einem Elektrotauchlack erfolgen. Bei Reparaturstellen kann dies aber auch z.B. nach dem mechanischen Bearbeiten von fehlerhaften Lackpartien, z.B. von in bestimmten Bereichen abgeschliffenem Primer, Elektrotauchlack oder/und Füller, genutzt werden. Die Beschichtung von Lötstellen, Schweißnähten oder/und Reparaturstellen erfolgt vorzugsweise weitgehend oder gänzlich so wie bei der Nahtabdichtung bzw. beim Schützen von Kanten.

Falls die metallischen Komponenten jedoch vor dem Löten oder Schweißen anstelle mit einem Primer oder Klarlack mit einem Primer mit sehr hohem Pigmentanteil wie z.B. einem Schweißprimer beschichtet werden sollten, kann der Abbrand und die Porosierung der gelöteten bzw. geschweißten Partien reduziert oder sogar gänzlich vermieden werden. Hierdurch wird auch eine bessere elektrische Leitfähigkeit der zu lötenden bzw. zu schweißenden Partien erreicht. Die Verwendung eines pigmentreichen Primers wie z.B. eines Schweißprimers hat darüber hinaus den Vorteil, daß in vielen Fällen auf eine Nahtabdichtung im Inneren einer umgebörtelten Partie durch Verfüllen wie z.B. an den Rändern von Türen verzichtet werden kann. Auch für diese Partien hat sich ein nachträglicher Schutz mit dem erfindungsgemäßen Überzug bewährt.

Vorzugsweise weist der polymere, weitgehend oder vollständig ausgehärtete Überzug eine Schichtdicke im Bereich von 1 bis 800 µm auf. Für den Schutz von Kanten, sonstigen Partien und zur Abdichtung von Nähten ist insbesondere eine Schichtdicke im Bereich von 2 bis 500 µm, vorzugsweise von 3 bis 200 µm von Vorteil. Insbesondere bei der automatisierten Beschichtung sowie zusätzlich auch bei der Ausbesserung von Lackschäden und ähnlichen Fehlern kann eine Schichtdicke im Bereich von 5 bis 100 µm, vorzugsweise im Bereich von 10 bis 50 µm, besonders vorteilhaft sein. Die Schichtdicke kann im Bereich der Kante, der sonstigen Partien bzw. der Naht, die abzudichten ist, grundsätzlich in weiten Bereichen schwanken. Falls hierbei auch Hohlräume zumindest teilweise verfüllt werden, können die Schichtdicken auch mehrere Millimeter betragen, wobei häufig Schichtdicken von bis zu etwa 5 mm gut und noch ohne besondere Aufwendungen mit aktinischer Strahlung durchstrahlt und ausgehärtet werden können. Der polymere Überzug kann auch häufig im Querschnitt näherungsweise die Form eines Tropfens oder einer Aufwölbung aufweisen, so daß man oft nicht von einer gleichmäßigen Schichtdicke sprechen kann. Die Schichtdicke liegt vorzugsweise im Bereich von 2 bis 500 µm, besonders bevorzugt im Bereich von 3 bis 200 µm, insbesondere im Bereich von 4 bis 100 µm, wobei die hohen Werte oft aufgrund der näherungsweise auftretenden Tropfenform im Bereich um die Kante erreicht werden. Hierbei ist es bevorzugt, nicht nur die Stirnfläche der Kante, sondern auch die beiden Seitenflächen in einer gewissen Breite mit dem polymeren Überzug zu beschichten. Bei der Nahtabdichtung und bei den sonstigen Partien können die Schichtdicken oft im Bereich von 1 bis 50 µm gehalten werden, vorzugsweise im Bereich von 1,5 bis 30 µm, insbesondere im Bereich von 2 bis 10 µm. In allen Fällen kann der auslaufende Rand des polymeren Überzugs auch eine geringere Schichtdicke als eben genannt aufweisen.

Auf die metallische Unterlage kann nach dem Aufbringen und mindestens teilweisen Aushärten des polymeren Überzugs mindestens eine Beschichtung aus jeweils mindestens einem Elektrotauchlack, Elektrotauchlackersatz, Lack oder/und Lack-ähnlichen Gemisch aufgebracht werden, die ggf. getrocknet und ggf. ausgehärtet wird.

Hierbei kann der polymere, weitgehend oder vollständig ausgehärtete Überzug ggf. eine nachträgliche Temperaturbelastung von mindestens 140 °C, vorzugsweise von mindestens 180 °C, erfahren und ohne Rißbildung vertragen. Hierbei wächst mit zunehmender Temperatur das Risiko der Rißbildung. Vorzugsweise werden diese Temperaturbelastungen auch bei Erhitzung auf eine derartige hohe Temperatur über eine halbe Stunde oder sogar über eine Stunde ertragen. Diese Temperatureinwirkung kann beispielsweise erforderlich werden, damit z.B. ein Decklack (Topcoat) eingebrannt werden kann. Hierbei können insbesondere bei dickeren Schichten bzw. Partien des polymeren Überzugs Risse entstehen (siehe Figur 3). In der Automobilindustrie wird der Decklack oft z.B. bei etwa 180 °C über eine halbe bis eine Stunde eingebrannt. Daher muß es dann ein Erfordernis des polymeren Überzugs sein, auch solche Behandlungen ohne Auftreten von Fehlern wie Rissen durchzustehen. Dagegen liegt die nachträgliche Temperaturbelastung z.B. bei Blechen oder Profilen für die Bauindustrie oft nur im Bereich von 20 bis 65 °C, wenn nachträglich kein Lack aufgebracht und eingebrannt wird.

Außerdem kann auf die metallische Unterlage nach dem Aufbringen und mindestens teilweisen Aushärten des polymeren Überzugs und ggf. nach dem Aufbringen mindestens einer weiteren Beschichtung eine Klebstoffschicht aufgebracht werden und kann die so vorbereitete metallische Unterlage mit mindestens einem anderen Element gleich danach oder später verklebt werden.

Außerdem kann die metallische Unterlage mit mindestens einem anderen Element z.B. durch Clinchen gefügt werden.

Ferner kann der polymere, weitgehend oder vollständig ausgehärtete Überzug derart korrosionsbeständig sein, daß sogar nach ca. 1000 h Salzsprühtest entsprechend DIN 50021 keine Rostansätze erkennbar sind. Der polymere, weitgehend oder vollständig ausgehärtete Überzug kann derart korrosionsbeständig sein, daß nach 10 Zyklen Wechselklimatest nach VDA 621-415 noch keine Rostansätze erkennbar sind, vorzugsweise nach 20 Zyklen.

Der polymere, weitgehend oder vollständig ausgehärtete Überzug kann eine Eindruckhärte nach DIN EN ISO 2815 im Bereich von 60 bis 150 bei einer Trockenfilmdicke von näherungsweise 100 µm aufweisen, vorzugsweise im Bereich von 70 bis 120, insbesondere im Bereich von 80 bis 100.

Der polymere, weitgehend oder vollständig ausgehärtete Überzug kann eine Elastizität (Verformbarkeit) von mindestens 5 mm bei Prüfung auf Tiefung nach DIN EN ISO 1520 an Blechen von 1 mm Dicke aufweisen, vorzugsweise von mindestens 6 mm. Hierbei kann durch Verschieben des Verhältnisses der nieder- und hochmolekularen Bindemittel auf eher niedermolekulare oder/und teilweise auch durch höhere Anteile an Monomeren und höhere Anteile an Photoinitiator eine geringere Elastizität eingestellt werden; dafür ergibt sich aber eine höhere Härte und ggf. auch eine größere Haftfestigkeit. Umgekehrt kann jedoch auch eine höhere Elastizität, dafür aber eine geringere Härte und oft auch eine geringere Haftfestigkeit eingestellt werden.

Die Aufgabe wird außerdem gelöst mit einem Überzug aus einem vernetzten Gemisch hergestellt nach dem erfindungsgemäßen Verfahren - insbesondere durch aktinisches Bestrahlen oder aktinisches Bestrahlen und thermische Behandlung bei Temperaturen von mindestens 80 °C des auf eine metallische, ggf. zusätzlich beschichtete Unterlage aufgebrachten Beschichtungsgemisches - insbesondere eines Beschichtungsmittels zum Aufbringen eines polymeren, korrosionsschützenden Überzugs auf eine metallische Unterlage für den Schutz eines Kantenbereichs bzw. sonstiger Partien oder/und für die Nahtabdichtung eines oder mehrerer, ggf. miteinander gefügter Bänder, Bleche oder/und Formteile - sowie ggf. durch vorheriges Trocknen.

Die Aufgabe wird schließlich gelöst mit einer metallischen Unterlage mit einem weitgehend oder vollständig ausgehärteten polymeren Überzug, der erfindungsgemäß hergestellt wurde.

Es war überraschend, daß es gelang, mit einem recht "kalten" Verfahren wie dem Beschichten mit einem polymeren, mit aktinischer Strahlung härtbaren Überzug ein sehr korrosionsbeständiges, allen Anforderungen an Kanten, sonstigen partien bzw. Nähte gerecht werdendes Verfahren bereitzustellen, da bei alternativen Beschichtungssystemen deutlich längere Trockenzeiten benötigt werden.

Besonders vorteilhaft ist es, daß hiermit sog. 100 %-Systeme, die weitgehend oder gänzlich frei an Wasser oder/und organischem Lösemittel sind, gestaltet werden können, da diese Systeme unmittelbar nach dem Aufbringen durch aktinisches Bestrahlen ausgehärtet werden können. Insbesondere kann es sich hierbei vorteilhafterweise um ein 100 %-UV-System handeln, wobei "UV" hierbei für aktinische Strahlung stehen soll.

Es hat sich auf den Kanten gerade bei Anwesenheit von Graten ein weitaus besserer Korrosionsschutz ergeben, als es ursprünglich erwartet wurde.

Es gelang hierbei, den polymeren Überzug besonders kratzbeständig, witterungsbeständig und beständig gegen die Einstrahlung von UV-Licht zu gestalten, was zwar mit einer aktinischen Härtung leichter als mit einer thermischen Aushärtung erzielt werden kann, aber dennoch nicht selbstverständlich ist. Desweiteren ist es gelungen, daß der polymere Überzug auf dem Untergrund gut haftet, auch auf einer Schicht eines Elektrotauchlacks oder auf einer Polyester enthaltenden Schicht, wie sie häufig auf Unterlagen, die für den Architekturbereich gedacht sind, verwendet werden.

Die erfindungsgemäßen Überzüge konnten - auch ohne Gehalt an nachvernetzenden Verbindungen und ohne nachträgliche thermische Aushärtung - derart korrosionsbeständig gestaltet werden, daß sie auch ohne Vorbehandlungsschichten unter dem polymeren Überzug sehr gute Ergebnisse zeigten. Daher ließen sich auch rohe Kanten, Lötstellen, Schweißnähte und Reparaturstellen bzw. Nähte mit rohen Partien erfolgreich vor Korrosion schützen. Der gleich gute hochwertige Korrosionsschutz wird auch bei der sehr schnellen Beschichtung am Band oder mit schnellen Automatisierungsvorrichtungen an Blechen bzw. Formteilen erreicht, wenn - wie üblich - sofort nach dem Aufbringen des erfindungsgemäßen Beschichtungsgemisches mit aktinischer Strahlung vernetzt wird.

Die metallischen, mit einem weitgehend oder vollständig ausgehärteten polymeren Überzug versehenen Unterlagen können eingesetzt werden in der Fahrzeug-, Luft- und Raumfahrtindustrie, im Bauwesen, für Außenverkleidungen, Dachverkleidungen und im Innenausbau, für den Apparate- und Maschinenbau, für Schrankelemente und Regale, für Haushaltsgeräte, vorzugsweise als Band, als Blech, als Formteil, als Verkleidung, als Abschirmung, als Karosserie oder als Teil einer Karosserie, als Türelement, Heckklappe oder Motorhaube, als Stoßstange, als Teil eines Fahrzeugs, Anhängers, Wohnmobils oder Flugkörpers, als Abdeckung, als Möbelstück oder Möbelelement, als Element eines Haushaltsgeräts wie z.B. von Geschirrspüler, Herd, Kühlschrank oder Waschmaschine, als Gestell, als Profil, als Fassadenelement, als Sandwich-Paneel, als Formteil komplizierter Geometrie, als Leitplanken-, Heizkörper- oder Zaunelement, als Garagentürelement, als Gehäuse, als Lampe, als Leuchte, als Ampelelement oder als Fenster-, Tür- oder Fahrradrahmen.

Das erfindungsgemäße Verfahren kann insbesondere im Rohbau oder im Karosseriebau, in einer Verzinkungslinie oder in einer Coil-Coating-Linie, aber auch in jeder anderen Fertigung mit entsprechenden Beschichtungsprozessen eingesetzt werden. Es kann jedoch - insbesondere bei Architekturanwendungen - z.B. an kleinen Coils oder an vorgeschnittenen Bändern oder Blechen - auch vor Ort wie z.B. an einer Baustelle durch Schneiden, durch Beschichten der metallischen Unterlage im Bereich von Kanten oder/und Nähten und durch aktinisches Bestrahlen genutzt werden; hierbei können insbesondere fertig beschichtete Architekturbleche bzw. -profile eingesetzt werden, die vor Ort auf Endmaß geschnitten und erfindungsgemäß beschichtet und ausgehärtet werden.

### Figuren:

Figur 1 zeigt eine Aufnahme des Schnittkantenbereichs zweier Stahlbleche, deren Randbereiche nach unten abgebogen wurden, mit Blick auf die obere, abgebogene Oberfläche, wobei die Schnittkante (S) selbst jeweils am unteren Rand erkennbar ist. Nach 10 Zyklen eines Wechselklimatests nach VDA 621-415 finden sich unterschiedlich starke Korrosionserscheinungen durch Lackunterwanderung, die von der Schnittkante ausgehen. Die untere Aufnahme zeigt die Korrosionserscheinungen bei dem Blech, das nach dem Schneiden (nur) mit einem KTL-Ersatzsystem im Kantenumgriff geschützt wurde (Stand der Technik), aber dennoch im Test stark korrodierte. Die obere Aufnahme stellt das mit einem erfindungsgemäßen Überzug versehene Blech dar, bei dem die geschnittene rohe Kante im Kantenumgriff (nur) mit dem erfindungsgemäßen polymeren Überzug geschützt wurde; auch ohne eine Vorbehandlungsschicht auf der Schnittflächenkante wird bereits eine hohe Korrosionsbeständigkeit erzielt.
Figur 2 gibt ein Anschliffbild durch einen Kantenbereich mit einem Grat quer durch ein Blech und quer zu der Schnittkante wieder, das aufzeigt, daß das erfindungsgemäße Beschichtungsgemisch bei ungeeigneter Einstellung bezüglich Benetzbarkeit, Temperatur oder Viskosität leicht von der Oberfläche eines Grates ablaufen kann, so daß nur eine dünne Beschichtung des polymeren Überzugs auf der Gratoberseite haften bleibt. Das Blech ist auf der einen Oberfläche verzinkt und mit einem dunkelgrau wiedergegebenen KTL-Ersatz (K) beschichtet. Der dunkelgrau dargestellte erfindungsgemäße polymere Überzug (P) ist annähernd in Tropfenform aufgebracht. Die Probe wurde in Kunstharz (mittelgrau) eingebettet.
Figur 3 verdeutlicht die insbesondere bei sehr dicken erfindungsgemäßen polymeren Überzügen ggf. auftretenden Risse in einem Anschliffbild (Querschliff), wenn die Elastizität der Formulierung nicht ausreichend auf die Anforderungen besonders dicker Beschichtungen (mehr als 500 µm dick) abgestimmt ist. Die Risse treten vorwiegend in den eingekreisten Bereichen des polymeren Überzugs (P) auf. Die Probe wurde ebenfalls in Kunstharz (E) eingebettet und nur hierbei erwärmt.

### Beispiele und Vergleichsbeispiele:

Im folgenden werden einzelne ausgewählte Ausführungsformen beispielhaft beschrieben.

Die bereits feinteilig vorliegenden Feststoffe wurden vor der Zugabe in einer Perlmühle auf eine Feinheit von kleiner 10 µm gemahlen. Die Ansätze für die Zusammensetzungen wurden entsprechend den Beispielen und Vergleichsbeispielen in Tabelle 1 vorbereitet. Die Bindemittel lagen in Form von Gemischen vor. Zuerst wurden Bindemittel, Monomere und Additive zusammengemischt und danach in einer Perlmühle gemahlen. Der Anteil der Monomere betrug nur 90 bis 95 Gew.-% der in Tabelle 1 genannten Menge. Anschließend wurden die feingemahlenen Feststoffe zugesetzt. Daraufhin wurden die restlichen Monomere (5 bis 10 % des Gesamtmonomergehalts) zugegeben. Schließlich wurde der Ansatz schnell gerührt und danach auf 40 µm gesiebt, um ggf. erfolgte Antrocknungen usw. zu entfernen. Diese Zusammensetzungen wurden vor dem Abfüllen evakuiert, um Blasen in der flüssigen polymeren Zusammensetzung vermeiden zu können. Der Wassergehalt betrug je Ansatz bis zu etwa 0,1 Gew.-%. Daneben wurden auch einzelne Versuche der Zusammensetzung des Beispiels 6 mit einem Wassergehalt von 1 bzw. 4,5 Gew.-% bzw. mit einem Gehalt an hydrophober Kieselsäure von 0,5 bzw. 1 Gew.-% zur starken Anhebung der Viskosität durchgeführt.

Mit den Beispielen und Vergleichsbeispielen der Tabellen 1 bis 3 sollten die Bleche mit einer ganzflächig aufgetragenen Beschichtung getestet werden, während mit denen der Tabelle 4 ein Auftrag in Form eines Kantenschutzes mit dem näherungsweisen Querschnitt in Form eines Tropfens (im Querschnitt) getestet werden sollte. Die Zusammensetzungen der Beispiele 10, 11, 15 und 16 entsprechen nicht der Erfindung.

Für die Beispiele der Tabellen 1 bis 3 wurden feuerverzinkte Stahlbleche verwendet, die nicht mit einer Vorbehandlungsschicht versehen waren. Die Zusammensetzung des jeweiligen erfindungsgemäßen Beschichtungsgemisches wird in Tabelle 1 aufgeführt, die Ergebnisse des Beschichtens und die Eigenschaften der Beschichtung finden sich in den Tabellen 2 bzw. 3. Bei diesen Versuchen wurden Varianten ohne, als auch mehrere mit einer zusätzlichen nachvernetzenden Verbindung getestet. Mindestens eine der Kanten dieser Bleche wurde geschnitten. Das erfindungsgemäße Beschichtungsgemisch wurde durch Rakeln oder Spritzen aufgetragen. Für das Spritzen wurde ein Düsendurchmesser von etwa 1 mm genutzt. Getrocknet wurde an bewegter Luft bei Raumtemperatur. Der polymere Überzug wurde bei Raumtemperatur mit einer Hg-dotierten UV-Lampe im Wellenlängenbereich zwischen 200 und 300 nm bei einer Leistung von 160 W/cm ausgehärtet.

Für die Beispiele und Vergleichsbeispiele der Tabelle 4 wurden feuerverzinkte und auch elektrolytisch verzinkte Stahlbleche verwendet, die nur teilweise nicht mit einer Vorbehandlungsschicht versehen waren. Bei einigen der Versuche wurde mindestens eine der Kanten dieser Bleche geschnitten. Das erfindungsgemäße Beschichtungsgemisch wurde durch ein manuelles Verfahren aufgetragen und manuell in eine entsprechend relativ gleichmäßige Form der Kantenschutzbeschichtung gebracht. Getrocknet wurde an bewegter Luft bei Raumtemperatur. Die polymere Beschichtung wurde bei Raumtemperatur mit einer Hg-dotierten UV-Lampe im Wellenlängenbereich zwischen 200 und 300 nm bei einer Leistung von 160 W/cm ausgehärtet. Bei den Versuchen, bei denen kein kathodischer Tauchlack (KTL) und auch kein mehrschichtiger Lackaufbau aufgebracht worden war, wurde nur der vergleichsweise schwache Konstantklimatest nach DIN 50017 KK durchgeführt, der allein hier sinnvolle Ergebnisse bringt. Andererseits wurden die anspruchsvollen Tests - der zyklische Wechselklimatest nach VDA 621-415 bzw. der Salzsprühtest nach DIN 50021 SS - nur an den KTL-lackierten oder mit einem mehrschichtigen Lackaufbau durchlackierten Blechen ausgeführt, da ein schwächerer Test wie der Konstantklimatest hier keine interessanten Ergebnisse erbracht hätte. Die in Tabelle 4 angeführten durchlackierten Bleche hatten den folgenden Aufbau: 1. Elektrolytische Verzinkung, 2. Chrom-freie Vorbehandlung, 3. Primer auf Basis von Polyester, 4. Basecoat auf Basis von Polyester, 5. Klarlack auf Basis von Acryl.

Es zeigte sich, daß die Beschichtungen auf Basis von Epoxyacrylat in einem Punkt relativ schlechte Ergebnisse erbrachten, weil sich die Beschichtung teilweise abgelöst hatte. Gute Ergebnisse hatten sich auf der Basis von Gemischen mit einem Anteil an Epoxyacrylat kleiner 50 Gew.-% ergeben, insbesondere bei der Korrosionsbeständigkeit sogar sehr gute. Epoxyacrylat kann den polymeren Überzug sehr hart gestalten, kann aber auch u.U. auch Anlaß für Vergilbung sein. Auch die Versuche mit einem Gehalt an organischem Lösemittel führten zu weniger guten Ergebnissen. Besonders bewährt hatten sich Proben auf der Basis von Urethanacrylat bzw. Polyester.

Der außerordentlich hohe Korrosionsschutz wurde nach Kenntnis der Anmelderin mit einem Lack oder lackähnlichen Material zuvor bisher noch nie erreicht: Denn nach mehr als 1000 Stunden Salzsprühtest hatten sich noch gar keine Korrosionserscheinungen angedeutet (Tabelle 4).

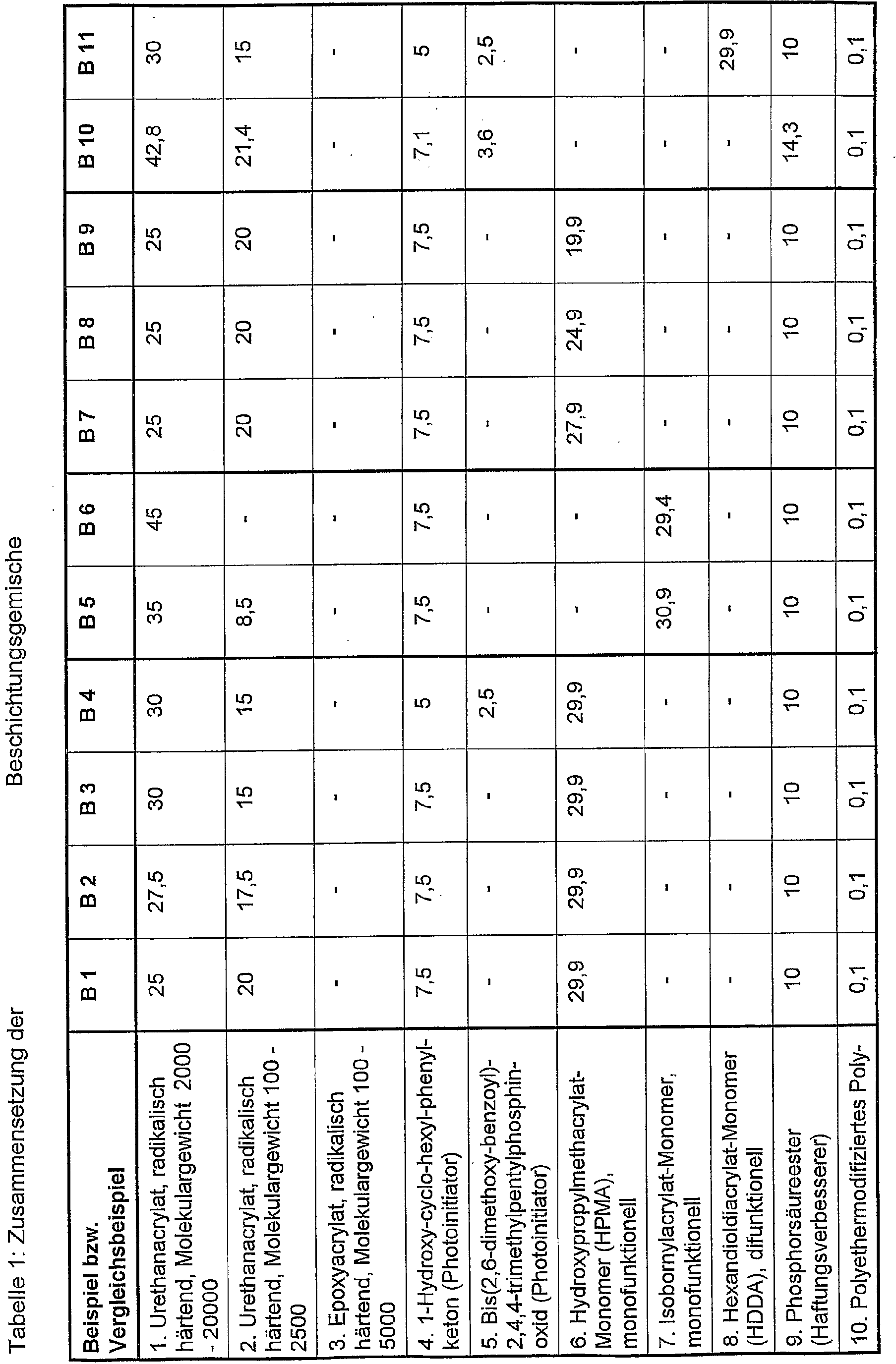

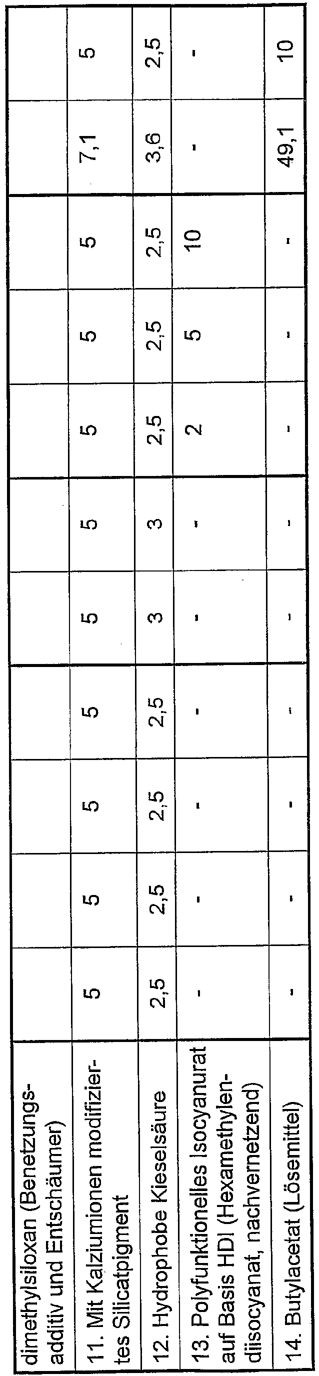

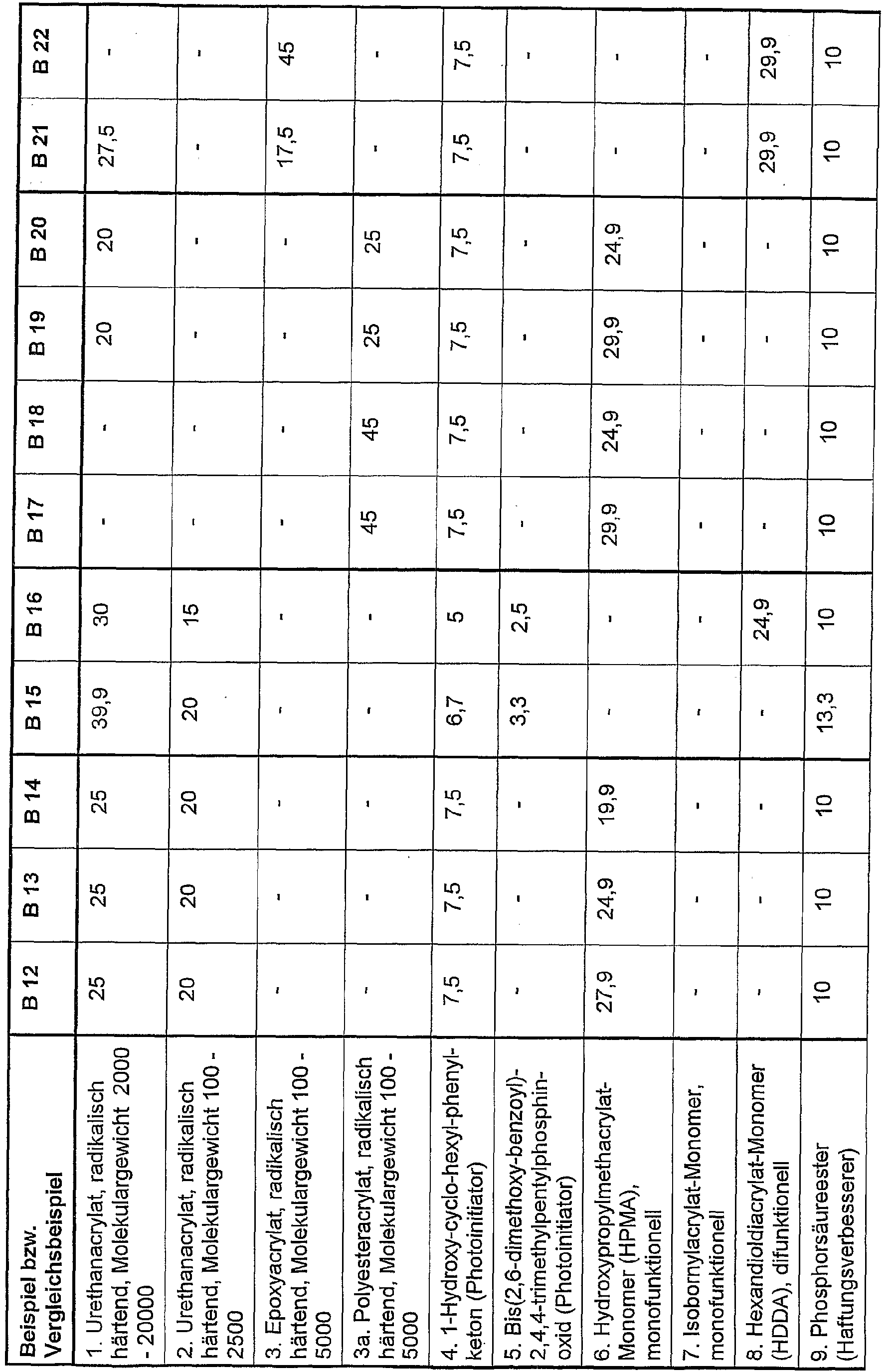

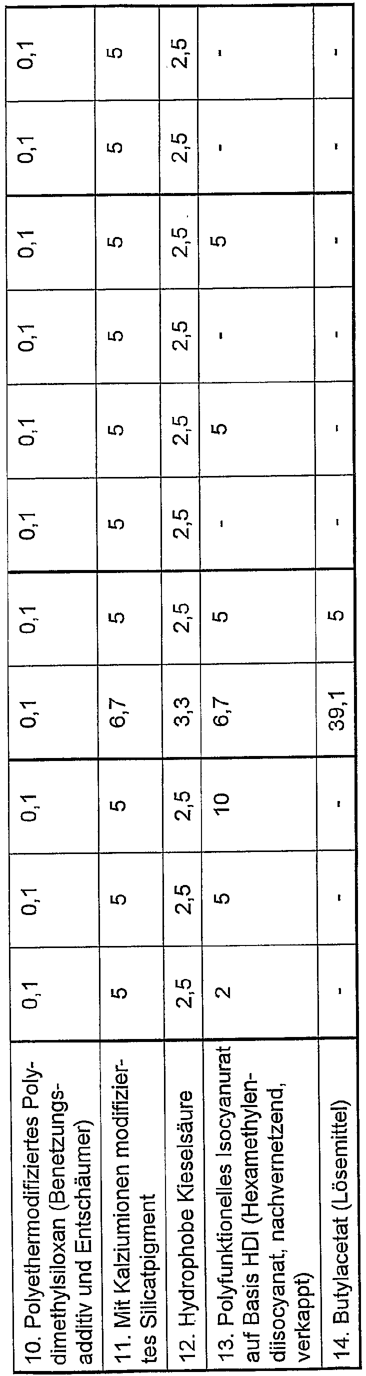

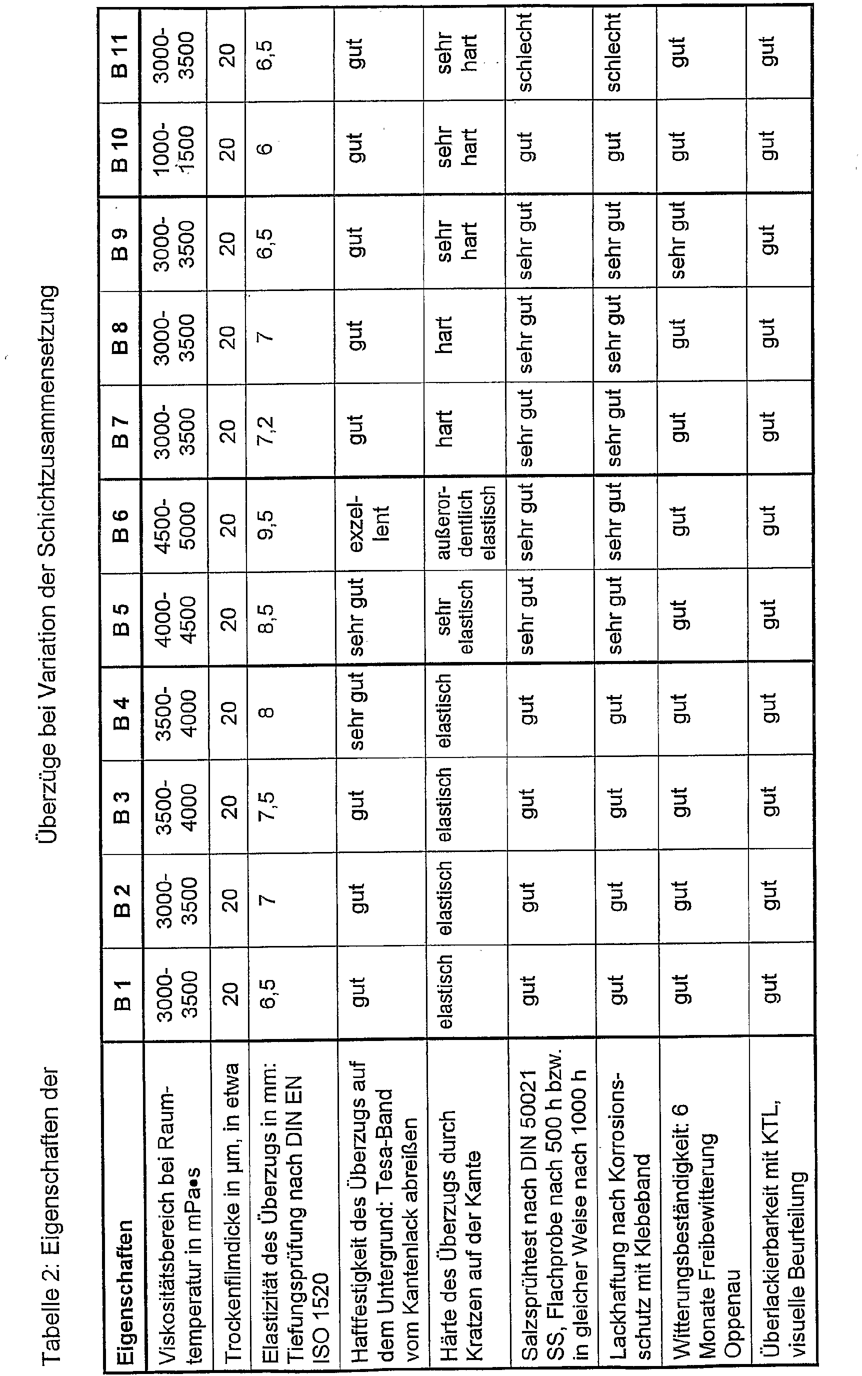

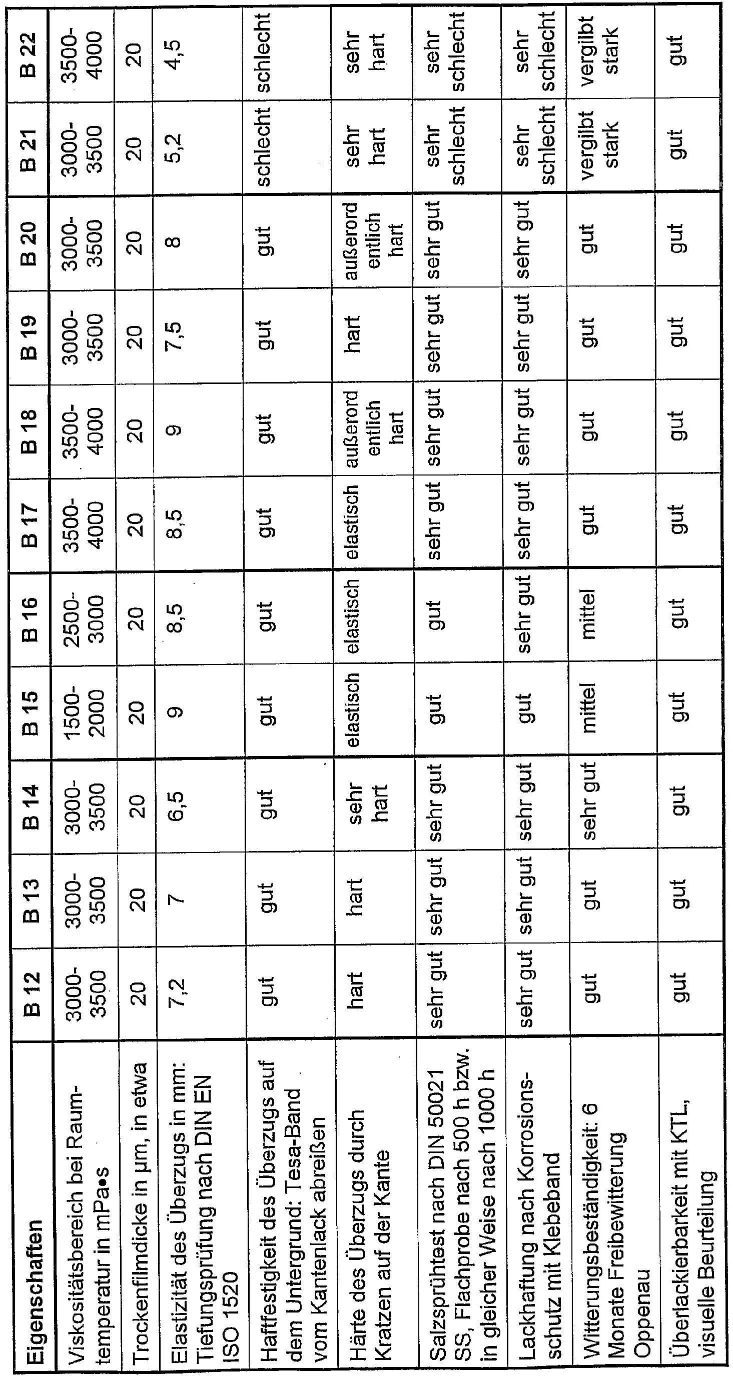

**Tabelle 3: Eigenschaften der Überzüge bei Variation von Trockenfilmdicke und Anteilen der Vernetzungsar**

| **Eigenschaften** | **B 23** | **B 5** | **B 24** | **B 25** | **B 6** | **B 26** | **B 27** | **B 8** | **B 28** |
|---|---|---|---|---|---|---|---|---|---|
| Zusammensetzung | **Gemisch nach B 5** | | | **Gemisch nach B 6** | | | **Gemisch nach B 8** | | |
| Trockenfilmdicke in µm | 10 | 20 | 30 | 10 | 20 | 30 | 10 | 20 | 30 |
| Anteil der UV-Härtung, % | 100 | 100 | 100 | 100 | 100 | 100 | 95 | 95 | 95 |
| Anteil der Nachvernetzung, % | 0 | 0 | 0 | 0 | 0 | 0 | 5 | 5 | 5 |
| Elastizität des Überzugs in mm: Tiefungsprüfung nach DIN EN ISO 1520 | 9 | 8,5 | 7 | 10 | 9,5 | 8 | 8 | 7 | 5,8 |
| Haftfestigkeit des Überzugs auf dem Untergrund: Tesa-Band vom Kantenlack abreißen | sehr gut | sehr gut | sehr gut | exzellent | exzellent | exzellent | gut | gut | gut |
| Härte des Überzugs: Kratzen auf der Kante | elastisch | sehr elastisch | besonders elastisch | sehr elastisch | außerordentlich elastisch | außerordentlich elastisch | hart | hart | hart |
| Salzsprühtest nach DIN 50021 SS, Flachprobe nach 500 h sowie nach 1000 h | sehr gut | sehr gut | exzellent | sehr gut | sehr gut | sehr gut | gut | sehr gut | sehr gut |
| Lackhaftung nach Korrosionsschutz mit Klebeband | sehr gut | sehr gut | sehr gut | sehr gut | sehr gut | sehr gut | sehr gut | sehr gut | gut |
| Witterungsbeständigkeit: 6 Monate Freibewitterung Oppenau | gut | gut | gut | gut | gut | gut | gut | gut | gut |
| Überlackierbarkeit mit KTL, visuelle Beurteilung | gut | gut | gut | gut | gut | gut | gut | gut | gut |

**Tabelle 4: Beschichtungsabfolge an Kanten von Stahlblechen und Ergebnisse der Korrosionsschutzprüfungen**

| Beispiel | Substrat: Stahl mit | Phosphatierung, Nachspüllösung | KTL 18 µm, Pb-haltig | Kante geschnitten ? | Kantenschutz nach Beispiel 6 | DIN 50017 KK | VDA 621-415 | VDA 621-415 | DIN 50021 SS | DIN 50021 SS |
|---|---|---|---|---|---|---|---|---|---|---|
| | | | | | | 1008 h | 5 Runden | 10 Runden | 504 h | 1008 h |
| | | | | | | Unterwanderung in mm | | | | |
| VB 31 | Z | Typ 1 | nein | nein | nein | 2,5 | N/A | N/A | N/A | N/A |
| VB 32 | Z | Typ 1 | nein | ja | nein | <1 | N/A | N/A | N/A | N/A |
| B 31 | Z | Typ 1 | nein | nein | ja | 0 | N/A | N/A | N/A | N/A |
| B 32 | Z | Typ 1 | nein | ja | ja | 0 | N/A | N/A | N/A | N/A |
| VB 33 | Z | Typ 1 | ja | nein | nein | N/A | <1 | < 1 | <1 | 1 |
| VB 34 | Z | Typ 1 | ja | ja | nein | N/A | <1 | 1 | 2 | 3 |
| B 33 | Z | Typ 1 | ja | nein | ja | N/A | 0 | 0 | 0 | 0 |
| B 34 | Z | Typ 1 | ja | ja | ja | N/A | 0 | 0 | 0 | 0 |
| VB 35 | ZE | Typ 2 | nein | nein | nein | 0,5 | N/A | N/A | N/A | N/A |
| VB 36 | ZE | Typ 2 | nein | ja | nein | 1 | N/A | N/A | N/A | N/A |
| B 35 | ZE | Typ 2 | nein | nein | ja | 0 | N/A | N/A | N/A | N/A |
| B 36 | ZE | Typ 2 | nein | ja | ja | 0 | N/A | N/A | N/A | N/A |
| VB 37 | ZE | Typ 2 | ja | nein | nein | N/A | <1 | 1,5 | 1 | 2,5 |
| VB 38 | ZE | Typ 2 | ja | ja | nein | N/A | <1 | 2 | 4 | 6,5 |
| B 37 | ZE | Typ 2 | ja | nein | ja | N/A | 0 | 0 | 0 | 0 |
| B 38 | ZE | Typ 2 | ja | ja | ja | N/A | 0 | 0 | 0 | 0 |
| VB 39 | ZE | Typ 3 | durchlackiertes Blech | ja | nein | N/A | <1 | 1 | 1 | 2,5 |
| B 39 | ZE | Typ 3 | durchlackiertes Blech | ja | ja | N/A | 0 | 0 | 0 | 0 |

| | | | | | | | | | | |
|---|---|---|---|---|---|---|---|---|---|---|
| Z = feuerverzinkt ZE = elektrolytisch verzinkt N/A = nicht ausgeführt | | | | | | | | | | |

### Phosphatierung und Nachspüllösung:

Typ 1: Trikation-Phosphatierung ohne Fluorid und anschließender Fluorid-haltiger Nachspüllösung
Typ 2: Trikation-Phosphatierung mit Fluorid und anschließender Fluorid-haltiger Nachspüllösung
Typ 3: Chrom-freie Phosphat-haltige Vorbehandlung ohne anschließend angewandte Nachspüllösung

## Patentansprüche

1. Verfahren zum Herstellen eines polymeren, korrosionsschützenden Überzugs auf einer metallischen Unterlage im Bereich einer Kante, einer Lötstelle, einer Schweißnaht, einer Reparaturstelle oder/und einer Naht, **dadurch gekennzeichnet, daß** man ein Beschichtungsgemisch, das bis zu 2 Gew.-% an Wasser oder/und bis zu 2 Gew.-% an organischem Lösemittel, mindestens ein radikalisch polymerisierbares Bindemittel, mindestens eine bei Einwirkung von aktinischer Strahlung freie Radikale bildende Verbindung, 1 bis 60 Gew.-% bezogen auf die Trockensubstanz an Monomeren, sowie Phosphorsäureester als Haftungsverbesserer enthält, auf einen Teil der Oberfläche der metallischen Unterlage im Bereich einer Kante, einer Lötstelle, einer Schweißnaht, einer Reparaturstelle oder/und einer Naht, vorzugsweise auf einem Band, Blech bzw. Formteil im unbeschichteten bzw. im teilweise oder vollständig beschichteten Zustand aufbringt, wobei diese Beschichtung eine Metallschicht, metallische Legierungsschicht, Vorbehandlungsschicht oder/und Lackschicht sein kann, daß man das polymere Gemisch ggf. trocknet und die aufgebrachte Beschichtung solange mit aktinischer Strahlung einer solchen Intensität bestrahlt, daß eine haftfeste, zähelastische, korrosionsschützende Beschichtung gebildet wird.

2. Verfahren nach Anspruch 1 **dadurch gekennzeichnet, daß** das Beschichtungsgemisch einen Gehalt an mindestens einer radikalisch polymerisierbaren Verbindung enthält mit einem Gesamtgehalt an radikalisch polymerisierbaren Verbindungen im Bereich von 15 bis 70 Gew.-% bezogen auf die Trockensubstanz.

3. Verfahren nach Anspruch 1 oder 2, **dadurch gekennzeichnet, daß** das Beschichtungsgemisch mindestens ein Bindemittel enthält, das eine Nachvernetzung ermöglicht, wobei der Gesamtgehalt an der mindestens einen nachvernetzenden Verbindung insbesondere 0,3 bis 30 Gew.-% beträgt bezogen auf die Trockensubstanz.

4. Verfahren nach einem der vorstehenden Ansprüche, **dadurch gekennzeichnet, daß** das Beschichtungsgemisch einen Gehalt an mindestens einer bei Einwirkung von aktinischer Strahlung freie Radikale bildenden Verbindung enthält, wobei der Gesamtgehalt an freie Radikale bildenden Verbindungen im Bereich von 3 bis 15 Gew.-% liegt bezogen auf die Trockensubstanz.

5. Verfahren nach einem der vorstehenden Ansprüche, **dadurch gekennzeichnet, daß** der Gesamtgehalt an Phosphorsäureester im Bereich von 0,1 bis 25 Gew.-% liegt bezogen auf die Trockensubstanz.

6. Verfahren nach einem der vorstehenden Ansprüche, **dadurch gekennzeichnet, daß** das Beschichtungsgemisch mindestens ein Korrosionschutzpigment enthält, wobei der Gesamtgehalt an Korrosionsschutzpigmenten insbesondere im Bereich von 0,1 bis 15 Gew.-% liegt bezogen auf die Trockensubstanz.

7. Verfahren nach einem der vorstehenden Ansprüche, **dadurch gekennzeichnet, daß** das Beschichtungsgemisch mindestens ein Gleitmittel wie z.B. Graphit oder/und Polyethylenwachs enthält, wobei der Gesamtgehalt an Gleitmitteln insbesondere im Bereich von 0,05 bis 5 Gew.-% liegt bezogen auf die Trockensubstanz.

8. Verfahren nach einem der vorstehenden Ansprüche, **dadurch gekennzeichnet, daß** das Beschichtungsgemisch Additive enthält wie z.B. Thixotropiehilfsmittel, Entschäumer, Oberflächenadditive zur Erhöhung der Kratzfestigkeit, Additive zur Untergrundbenetzung insbesondere zur Haftung auf Elektrotauchlackschichten oder auf Elektrotauchlackersatzschichten, Haftungsverbesserer z.B. zur Haftung auf metallischem Untergrund, auf Elektrotauchlackschichten oder auf Elektrotauchlackersatzschichten wie z.B. Phosphorsäureester, wobei der Gesamtgehalt an derartigen Additiven insbesondere im Bereich von 0,05 bis 10 Gew.-% liegt bezogen auf die Trockensubstanz.

9. Verfahren nach einem der vorstehenden Ansprüche, **dadurch gekennzeichnet, daß** das Beschichtungsgemisch thixotrop ist.

10. Verfahren nach einem der vorstehenden Ansprüche, **dadurch gekennzeichnet, daß** die metallische Unterlage eine Oberfläche im wesentlichen bestehend aus Aluminium, Stahl oder/und einer Aluminium, Eisen, Magnesium, Titan oder/und Zink enthaltenden Legierung aufweist, wobei diese Oberfläche noch zusätzlich mit mindestens einer Vorbehandlungsschicht versehen sein kann.

11. Verfahren nach einem der vorstehenden Ansprüche, **dadurch gekennzeichnet, daß** die metallische Unterlage elektrolytisch verzinkt oder feuerverzinkt wird.

12. Verfahren nach einem der vorstehenden Ansprüche, **dadurch gekennzeichnet, daß** die metallische Unterlage (zusätzlich) mit mindestens einer Vorbehandlungsschicht, mit mindestens einer Lackschicht oder/und mindestens einer Lack-ähnlichen Schicht überzogen wird, bevor das polymere Gemisch aufgebracht wird.

13. Verfahren nach einem der vorstehenden Ansprüche, **dadurch gekennzeichnet, daß** die metallische Unterlage, die ggf. bereits beschichtet ist, im Bereich der Kante oder/und der Naht auf jeder Seite der Kante und über die Kante bzw. entlang der Naht und über die Naht vorzugsweise in einer Breite von jeweils 0,5 bis 20 mm von der Kante bzw. Naht aus mit einem polymeren Überzug beschichtet wird, wobei die Kante roh oder beschichtet sein kann und wobei jene erste Beschichtung aus jeweils mindestens einer Schicht einer Vorbehandlungslösung, eines Lackes oder/und einer Lack-ähnlichen Schicht bestehen kann.

14. Verfahren nach einem der vorstehenden Ansprüche, **dadurch gekennzeichnet, daß** die metallische Unterlage, die ggf. bereits beschichtet ist, im Bereich der Naht, wo sich ein Hohlraum wie z.B. ein Spalt befindet, mit einem dünnflüssigeren Beschichtungsgemisch verschlossen und ggf. zumindest geringfügig verfüllt wird.

15. Verfahren nach einem der vorstehenden Ansprüche, **dadurch gekennzeichnet, daß** vor dem Aufbringen des Beschichtungsgemisches für einen polymeren Überzug ein Elektrotauchlackersatz z.B. durch Aufwalzen oder ein Elektrotauchlack und ggf. vorher auch eine Vorbehandlung wie z.B. eine Phosphatierung aufgetragen wird.

16. Verfahren nach einem der vorstehenden Ansprüche, **dadurch gekennzeichnet, daß** eine metallische Unterlage, die mindestens zwei Lackschichten aufweist, geschnitten, gestanzt oder/und gebörtelt wird, bevor das Beschichtungsgemisch für den polymeren Überzug aufgebracht wird.

17. Verfahren nach einem der vorstehenden Ansprüche, **dadurch gekennzeichnet, daß** die Oberfläche zuerst geschnitten, gestanzt oder/und gebörtelt wird, danach u.U. alkalisch oder/und sauer gereinigt bzw. gebeizt wird und dann evtl. mit mindestens einer Vorbehandlungslösung wie z.B. auf Basis von Fluorid oder/und Phosphat beschichtet wird, bevor das Beschichtungsgemisch für den polymeren Überzug aufgebracht wird.

18. Verfahren nach einem der vorstehenden Ansprüche, **dadurch gekennzeichnet, daß** man die metallische Unterlage vor dem Beschichten mit dem Beschichtungsgemisch für den polymeren Überzug auf Temperaturen im Bereich von 10 bis 120 °C erwärmt.

19. Verfahren nach einem der vorstehenden Ansprüche, **dadurch gekennzeichnet, daß** man die Oberfläche der metallischen Unterlage mit dem Beschichtungsgemisch für den polymeren Überzug bei einer Temperatur im Bereich von - 20 bis 180 °C überzieht.

20. Verfahren nach einem der vorstehenden Ansprüche, **dadurch gekennzeichnet, daß** man die Oberfläche der metallischen Unterlage mit dem Beschichtungsgemisch für den polymeren Überzug durch Aufpinseln, Gießen, Raupenauftrag, Spritzen, Sprühen, Tauchen oder/und Walzen ggf. unter Verwendung eines Rakels überzieht, wobei ggf. im Unterdruck gearbeitet werden kann.

21. Verfahren nach einem der vorstehenden Ansprüche, **dadurch gekennzeichnet, daß** ein metallisches Band bei einer Bandlaufgeschwindigkeit im Bereich von 30 bis 220 m pro Minute beschichtet wird, wobei die Auftragsvorrichtung für das Beschichtungsgemisch oder/und die Vorrichtung zur aktinischen Bestrahlung des polymeren Überzugs ortsfest gehalten werden kann/können.

22. Verfahren nach einem der vorstehenden Ansprüche, **dadurch gekennzeichnet, daß** die metallische Unterlage mit einer Geschwindigkeit im Bereich von 0,01 bis 200 m pro Minute bewegt wird und daß die Auftragsvorrichtung für das Beschichtungsgemisch oder/und die Vorrichtung zur aktinischen Bestrahlung des polymeren Überzugs ortsfest gehalten werden.

23. Verfahren nach einem der vorstehenden Ansprüche, **dadurch gekennzeichnet, daß** die metallische Unterlage ortsfest gehalten wird und daß die Auftragsvorrichtung für das Beschichtungsgemisch oder/und die Vorrichtung zur aktinischen Bestrahlung des polymeren Überzugs, insbesondere jeweils als automatisierte Vorrichtung, mit einer Geschwindigkeit im Bereich von 0,01 bis 200 m pro Minute bewegt werden.

24. Verfahren nach einem der vorstehenden Ansprüche, **dadurch gekennzeichnet, daß** die Auftragsvorrichtung für das Beschichtungsgemisch und die Vorrichtung zur aktinischen Bestrahlung des polymeren Überzugs miteinander gekoppelt sind, insbesondere auf gleichem Abstand gehalten bzw. geführt werden.

25. Verfahren nach einem der vorstehenden Ansprüche, **dadurch gekennzeichnet, daß** man den polymeren Überzug nach dem Aufbringen auf Temperaturen erwärmt, die gegenüber der Temperatur der metallischen Unterlage beim Aufbringen des polymeren Überzugs um 1 bis 60 °C höher liegen, um den polymeren Überzug verlaufen zu lassen.

26. Verfahren nach einem der vorstehenden Ansprüche, **dadurch gekennzeichnet, daß** man den polymeren Überzug unmittelbar nach dem Aufbringen oder später, insbesondere nach einer Trocknung, mit aktinischer Strahlung bestrahlt.

27. Verfahren nach einem der vorstehenden Ansprüche, **dadurch gekennzeichnet, daß** die mit dem polymeren, teilweise ausgehärteten Überzug beschichtete Unterlage anschließend auf Temperaturen im Bereich von 80 bis 180 °C erhitzt wird, um die Nachvernetzungsreaktion auszulösen und thermisch auszuhärten.

28. Verfahren nach einem der vorstehenden Ansprüche, **dadurch gekennzeichnet, daß** mit dem polymeren Überzug alle Grate der Schnittkante überdeckt werden.

29. Verfahren nach einem der vorstehenden Ansprüche, **dadurch gekennzeichnet, daß** der polymere weitgehend oder vollständig ausgehärtete Überzug eine Schichtdicke im Bereich von 1 bis 800 µm aufweist, vorzugsweise und insbesondere bei automatisierter Beschichtung im Bereich von 10 bis 50 µm.

30. Verfahren nach einem der vorstehenden Ansprüche, **dadurch gekennzeichnet, daß** auf die metallische Unterlage nach dem Aufbringen und mindestens teilweisen Aushärten des polymeren Überzugs eine Beschichtung aus jeweils mindestens einem Elektrotauchlack, Elektrotauchlackersatz, Lack oder/und Lack-ähnlichen Gemisch aufgebracht, ggf. getrocknet und ggf. ausgehärtet wird.

31. Verfahren nach einem der vorstehenden Ansprüche, **dadurch gekennzeichnet, daß** der polymere weitgehend oder vollständig ausgehärtete Überzug eine nachträgliche Temperaturbelastung von mindestens 140 °C, vorzugsweise von mindestens 180 °C, ohne Rißbildung verträgt.

32. Verfahren nach einem der vorstehenden Ansprüche, **dadurch gekennzeichnet, daß** auf die metallische Unterlage nach dem Aufbringen und mindestens teilweisen Aushärten des polymeren Überzugs und ggf. nach dem Aufbringen mindestens einer weiteren Beschichtung eine Klebstoffschicht aufgebracht und die so vorbereitete metallische Unterlage mit mindestens einem anderen Element verklebt wird.

33. Verfahren nach einem der vorstehenden Ansprüche, **dadurch gekennzeichnet, daß** die metallische Unterlage mit mindestens einem anderen Element z.B. durch Clinchen gefügt wird.

34. Verfahren nach einem der vorstehenden Ansprüche, **dadurch gekennzeichnet, daß** der polymere weitgehend oder vollständig ausgehärtete Überzug derart korrosionsbeständig ist, daß nach 1000 h Salzsprühtest nach DIN 50021 noch keine Rostansätze erkennbar sind.

35. Verfahren nach einem der vorstehenden Ansprüche, **dadurch gekennzeichnet, daß** der polymere weitgehend oder vollständig ausgehärtete Überzug derart korrosionsbeständig ist, daß nach 10 Zyklen Wechselklimatest nach VDA 621-415 noch keine Rostansätze erkennbar sind, vorzugsweise auch nicht nach 20 Zyklen.

36. Verfahren nach einem der vorstehenden Ansprüche, **dadurch gekennzeichnet, daß** der polymere weitgehend oder vollständig ausgehärtete Überzug eine Eindruckhärte nach DIN EN ISO 2815 bei einer Trockenfilmdicke von näherungsweise 100 µm im Bereich von 60 bis 150 aufweist.

37. Verfahren nach einem der vorstehenden Ansprüche, **dadurch gekennzeichnet, daß** der polymere weitgehend oder vollständig ausgehärtete Überzug eine Elastizität von mindestens 5 mm bei Prüfung auf Tiefung nach DIN EN ISO 1520 aufweist, vorzugsweise von mindestens 6 mm .

38. Verfahren nach einem der vorstehenden Ansprüche, **dadurch gekennzeichnet, daß** gleichzeitig mindestens eine Kante und mindestens eine Naht geschützt werden.

## Claims

1. A process for producing a polymeric, corrosion-preventing covering on a metallic substrate in the region of an edge, a solder point, a weld, a repair point and/or a seam, wherein it comprises applying a coating mixture which comprises up to 2 wt% of water and/or up to 2 wt% of organic solvent, at least one radically polymerizable binder, at least one compound which forms free radicals on exposure to actinic radiation, 1 to 60 wt%, based on the dry matter, of monomers, and also phosphoric esters as adhesion promoters, to a part of the surface of the metallic substrate in the region of an edge, a solder point, a weld, a repair point and/or a seam, preferably to a strip, sheet or shaped part in the uncoated state or in the partly or fully coated state, it being possible for this coating to be a metal layer, metallic alloy layer, pretreatment layer and/or paint layer, wherein the polymeric mixture is optionally dried, and the applied coating is irradiated with actinic radiation of an intensity and for a time such that a firmly adhering, ductile, corrosion-preventing coating is formed.

2. The process according to claim 1, wherein the coating mixture comprises at least one radically polymerizable compound, with a total amount of radically polymerizable compounds in the range from 15 to 70 wt%, based on the dry matter.

3. The process according to claim 1 or 2, wherein the coating mixture comprises at least one binder which enables after-crosslinking, the total amount of the at least one after-crosslinking compound being in particular 0.3 to 30 wt%, based on the dry matter.

4. The process according to any of the preceding claims, wherein the coating mixture comprises at least one compound which forms free radicals on exposure to actinic radiation, the total amount of compounds which form free radicals being in the range from 3 to 15 wt%, based on the dry matter.

5. The process according to any of the preceding claims, wherein the total amount of phosphoric ester is in the range from 0.1 to 25 wt%, based on the dry matter.

6. The process according to any of the preceding claims, wherein the coating mixture comprises at least one anticorrosion pigment, the total amount of anticorrosion pigments being in particular in the range from 0.1 to 15 wt%, based on the dry matter.

7. The process according to any of the preceding claims, wherein the coating mixture comprises at least one lubricant such as, for example, graphite and/or polyethylene wax, the total amount of lubricants being in particular in the range from 0.05 to 5 wt%, based on the dry matter.

8. The process according to any of the preceding claims, wherein the coating mixture comprises additives such as, for example, thixotropic assistants, defoamers, surface additives for increasing the scratch resistance, additives for substrate wetting, particularly for adhesion to electrocoat films or to electrocoat substituted films, adhesion promoters for example for adhesion to metallic substrate, to electrocoat films or to electrocoat substituted films, such as, for example, phosphoric esters, the total amount of such additives being in particular in the range from 0.05 to 10 wt%, based on the dry matter.

9. The process according to any of the preceding claims, wherein the coating mixture is thixotropic.

10. The process according to any of the preceding claims, wherein the metallic substrate has a surface substantially consisting of aluminum, steel and/or an alloy comprising aluminum, iron, magnesium, titanium and/or zinc, it being possible for this surface to be additionally provided with at least one pretreatment layer.

11. The process according to any of the preceding claims, wherein the metallic substrate is electro-galvanized or pot-dip galvanized.

12. The process according to any of the preceding claims, wherein the metallic substrate is covered (additionally) with at least one pretreatment layer, with at least one paint layer and/or at least one paintlike layer before the polymeric mixture is applied.

13. The process according to any of the preceding claims, wherein the metallic substrate, which optionally is already coated, is coated in the region of the edge and/or seam on each side of the edge and over the edge and/or along the seam and over the seam, preferably in a width with in each case 0.5 to 20 mm from the edge and/or seam, with a polymeric covering, it being possible for the edge to be roughed or coated and it being possible for this first coating to consist of in each case at least one layer of a pretreatment solution, of a paint and/or of a paintlike layer.

14. The process according to any of the preceding claims, wherein the metallic substrate, which optionally is already coated, is sealed and optionally at least slightly filled with a relatively low-viscosity coating mixture in the region of the seam where there is a cavity such as, for example, a gap.

15. The process according to any of the preceding claims, wherein, before the coating mixture is applied, for a polymeric covering, an electrocoat material substitute is applied, for example, by rolling or an electrocoat material and optionally beforehand a pretreatment as well such as, for example, a phosphatizing treatment is applied.

16. The process according to any of the preceding claims, wherein a metallic substrate which has at least two paint layers is cut, stamped and/or edged before the coating mixture for the polymeric covering is applied.

17. The process according to any of the preceding claims, wherein the surface is first cut, stamped and/or edged, thereafter, where appropriate, subjected to alkaline and/or acidic cleaning and/or pickling, and then possibly coated with at least one pretreatment solution, based for example on fluoride and/or phosphate, before the coating mixture for the polymeric covering is applied.

18. The process according to any of the preceding claims, wherein the metallic substrate, before being coated with the coating mixture for the polymeric covering, is heated to temperatures in the range from 10 to 120°C.

19. The process according to any of the preceding claims, wherein the surface of the metallic substrate is covered with the coating mixture for the polymeric covering at a temperature in the range from -20 to 180°C.

20. The process according to any of the preceding claims, wherein the surface of the metallic substrate is covered with the coating mixture for the polymeric covering by brushing, pouring, bead application, injection, spraying, dipping and/or rolling, optionally with the use of a doctor blade, it being possible optionally to operate under reduced pressure.

21. The process according to any of the preceding claims, wherein a metallic strip is coated at a strip running speed in the range from 30 to 220 m per minute, it being possible for the application equipment for the coating mixture and/or the equipment for actinic irradiation of the polymeric covering to be held stationary.

22. The process according to any of the preceding claims, wherein the metallic substrate is moved with a speed in the range from 0.01 to 200 m per minute and wherein the application equipment for the coating mixture and/or the equipment for actinic irradiation of the polymeric covering are held stationary.

23. The process according to any of the preceding claims, wherein the metallic substrate is held stationary and wherein the application equipment for the coating mixture and/or the equipment for actinic irradiation of the polymeric covering, more particularly in each case in the form of automated equipment, are moved with a speed in the range from 0.01 to 200 m per minute.

24. The process according to any of the preceding claims, wherein the application equipment for the coating mixture and the equipment for actinic irradiation of the polymeric covering are coupled with one another, being more particularly guided and/or held at the same distance.

25. The process according to any of the preceding claims, wherein the polymeric covering, after application, is heated to temperatures which are higher by 1 to 60°C than the temperature of the metallic substrate on application of the polymeric covering, in order to allow the polymeric covering to flow.

26. The process according to any of the preceding claims, wherein the polymeric covering, immediately after application or later, more particularly after drying, is irradiated with actinic radiation.

27. The process according to any of the preceding claims, wherein the substrate coated with the polymeric, partly cured covering is subsequently heated to temperatures in the range from 80 to 180°C in order to initiate the after-crosslinking reaction and to effect thermal curing.

28. The process according to any of the preceding claims, wherein all burrs of the cut edge are covered with the polymeric covering.

29. The process according to any of the preceding claims, wherein the polymeric, largely or completely cured covering has a layer thickness in the range from 1 to 800 µm, preferably, and more particularly in the case of automated coating, in the range from 10 to 50 µm.

30. The process according to any of the preceding claims, wherein a coating of in each case at least one electrocoat material, electrocoat material substitute, paint and/or paintlike mixture is applied to the metallic substrate after the application and at least partial curing of the polymeric covering, and is optionally dried and optionally cured.

31. The process according to any of the preceding claims, wherein the polymeric, largely or completely cured covering withstands a subsequent temperature exposure of at least 140°C, preferably of at least 180°C, without cracking.

32. The process according to any of the preceding claims, wherein an adhesive layer is applied to the metallic substrate, after the application and at least partial curing of the polymeric covering and optionally after the application of at least one further coating, and the metallic substrate thus prepared is bonded to at least one other element.

33. The process according to any of the preceding claims, wherein the metallic substrate is joined to at least one other element, for example, by clinching.

34. The process according to any of the preceding claims, wherein the polymeric, largely or completely cured covering has corrosion resistance such that still no incipient rusting is evident after 1000 h of DIN 50021 salt spray test.

35. The process according to any of the preceding claims, wherein the polymeric, largely or completely cured covering has corrosion resistance such that still no incipient rusting is evident after 10 cycles of VDA 621-415 cyclic corrosion test, preferably not after 20 cycles either.

36. The process according to any of the preceding claims, wherein the polymeric, largely or completely cured covering has a DIN EN ISO 2815 indentation hardness at a dry film thickness of approximately 100 µm in the range from 60 to 150.

37. The process according to any of the preceding claims, wherein the polymeric, largely or completely cured covering has an elasticity of at least 5 mm in a DIN EN ISO 1520 cupping test, preferably of at least 6 mm.

38. The process according to any of the preceding claims, wherein at least one edge and at least one seam are protected at the same time.

## Revendications

1. Procédé de fabrication d'un revêtement polymère anticorrosion sur un substrat métallique dans la zone d'un bord, d'un emplacement de brasure, d'un joint de soudure, d'un emplacement de réparation et/ou d'un joint, **caractérisé en ce qu'**un mélange de revêtement, qui contient jusqu'à 2 % en poids d'eau et/ou jusqu'à 2 % en poids d'un solvant organique, au moins un liant polymérisable par voie radicalaire, au moins un composé formant des radicaux libres sous l'effet d'un rayonnement actinique, 1 à 60 % en poids, par rapport à la substance sèche, de monomères, ainsi que des esters de l'acide phosphorique en tant qu'agent d'amélioration de l'adhésion, est appliqué sur une partie de la surface du substrat métallique dans la zone d'un bord, d'un emplacement de brasure, d'un joint de soudure, d'un emplacement de réparation et/ou d'un joint, de préférence sur une bande, une tôle ou une pièce moulée à l'état non revêtu ou partiellement ou entièrement revêtu, ce revêtement pouvant être une couche métallique, une couche d'alliage métallique, une couche de prétraitement et/ou une couche de vernis, **en ce que** le mélange polymère est éventuellement séché et le revêtement appliqué est exposé à un rayonnement actinique d'une intensité telle et pendant une durée telle qu'un revêtement anticorrosion adhérent et viscoplastique soit formé.

2. Procédé selon la revendication 1, **caractérisé en ce que** le mélange de revêtement contient une teneur en au moins un composé polymérisable par voie radicalaire, avec une teneur totale en composés polymérisables par voie radicalaire dans la plage allant de 15 à 70 % en poids, par rapport à la substance sèche.

3. Procédé selon la revendication 1 ou 2, **caractérisé en ce que** le mélange de revêtement contient au moins un liant, qui permet une post-réticulation, la teneur totale en ledit au moins un composé post-réticulant étant notamment de 0,3 à 30 % en poids, par rapport à la substance sèche.

4. Procédé selon l'une quelconque des revendications précédentes, **caractérisé en ce que** le mélange de revêtement contient une teneur en au moins un composé formant des radicaux libres sous l'effet d'un rayonnement actinique, la teneur totale en composés formant des radicaux libres se situant dans la plage allant de 3 à 15 % en poids, par rapport à la substance sèche.

5. Procédé selon l'une quelconque des revendications précédentes, **caractérisé en ce que** la teneur totale en esters de l'acide phosphorique se situe dans la plage allant de 0,1 à 25 % en poids, par rapport à la substance sèche.

6. Procédé selon l'une quelconque des revendications précédentes, **caractérisé en ce que** le mélange de revêtement contient au moins un pigment anticorrosion, la teneur totale en pigments anticorrosion se situant notamment dans la plage allant de 0,1 à 15 % en poids, par rapport à la substance sèche.

7. Procédé selon l'une quelconque des revendications précédentes, **caractérisé en ce que** le mélange de revêtement contient au moins un agent lubrifiant, tel que p. ex. le graphite et/ou une cire de polyéthylène, la teneur totale en agents lubrifiants se situant notamment dans la plage allant de 0,05 à 5 % en poids, par rapport à la substance sèche.

8. Procédé selon l'une quelconque des revendications précédentes, **caractérisé en ce que** le mélange de revêtement contient des additifs, tels que p. ex. des adjuvants thixotropiques, des antimousses, des additifs de surface pour augmenter la résistance aux éraflures, des additifs pour le mouillage du substrat, notamment pour l'adhésion sur des couches de vernis pour électrodéposition ou des couches de substituts de vernis pour électrodéposition, des agents d'amélioration de l'adhésion, p. ex. pour l'adhésion sur un substrat métallique, sur des couches de vernis pour électrodéposition ou sur des couches de substituts de vernis pour électrodéposition, tels que p. ex. des esters de l'acide phosphorique, la teneur totale en tels additifs se situant notamment dans la plage allant de 0,05 à 10 % en poids, par rapport à la substance sèche.

9. Procédé selon l'une quelconque des revendications précédentes, **caractérisé en ce que** le mélange de revêtement est thixotropique.

10. Procédé selon l'une quelconque des revendications précédentes, **caractérisé en ce que** le substrat métallique présente une surface essentiellement constituée par de l'aluminium, de l'acier et/ou un alliage contenant de l'aluminium, du fer, du magnésium, du titane et/ou du zinc, cette surface pouvant encore en outre être munie d'au moins une couche de prétraitement.

11. Procédé selon l'une quelconque des revendications précédentes, **caractérisé en ce que** le substrat métallique est galvanisé électrolytiquement ou galvanisé à chaud.

12. Procédé selon l'une quelconque des revendications précédentes, **caractérisé en ce que** le substrat métallique est (en outre) revêtu avec au moins une couche de prétraitement, avec au moins une couche de vernis et/ou avec au moins une couche semblable à un vernis, avant l'application du mélange polymère.

13. Procédé selon l'une quelconque des revendications précédentes, **caractérisé en ce que** le substrat métallique, qui est éventuellement déjà revêtu, est revêtu dans la zone du bord et/ou du joint sur chaque côté du bord et sur le bord ou le long du joint et sur le joint, de préférence en une largeur à chaque fois de 0,5 à 20 mm du bord ou du joint, avec un revêtement polymère, le bord pouvant être brut ou revêtu, et ce premier revêtement pouvant être constitué par à chaque fois au moins une couche d'une solution de prétraitement, d'un vernis et/ou une couche semblable à un vernis.

14. Procédé selon l'une quelconque des revendications précédentes, **caractérisé en ce que** le substrat métallique, qui est éventuellement déjà revêtu, est fermé et éventuellement au moins légèrement rempli dans la zone du joint, où se trouve une cavité telle que p. ex. une fente, avec un mélange de revêtement plus liquide.

15. Procédé selon l'une quelconque des revendications précédentes, **caractérisé en ce qu'**avant l'application du mélange de revêtement pour un revêtement polymère, un substitut de vernis pour électrodéposition, p. ex. par cylindrage, ou un vernis pour électrodéposition et éventuellement auparavant également un prétraitement tel que p. ex. une phosphatation, sont appliqués.

16. Procédé selon l'une quelconque des revendications précédentes, **caractérisé en ce qu'**un substrat métallique, qui comprend au moins deux couches de vernis, est découpé, estampé et/ou bordé avant l'application du mélange de revêtement pour le revêtement polymère.

17. Procédé selon l'une quelconque des revendications précédentes, **caractérisé en ce que** la surface est tout d'abord découpée, estampée et/ou bordée, puis le cas échéant nettoyée ou décapée par voie alcaline et/ou acide, puis éventuellement revêtue avec au moins une solution de prétraitement, p. ex. à base de fluorure et/ou de phosphate, avant l'application du mélange de revêtement pour le revêtement polymère.

18. Procédé selon l'une quelconque des revendications précédentes, **caractérisé en ce que** le substrat métallique est porté à des températures dans la plage allant de 10 à 120 °C avant le revêtement avec le mélange de revêtement pour le revêtement polymère.

19. Procédé selon l'une quelconque des revendications précédentes, **caractérisé en ce que** la surface du substrat métallique est revêtue avec le mélange de revêtement pour le revêtement polymère à une température dans la plage allant de -20 à 180 °C.

20. Procédé selon l'une quelconque des revendications précédentes, **caractérisé en ce que** la surface du substrat métallique est revêtue avec le mélange de revêtement pour le revêtement polymère par badigeonnage, coulée, application d'un cordon, injection, pulvérisation, immersion et/ou cylindrage, éventuellement en utilisant une racle, une sous-pression pouvant éventuellement être utilisée.

21. Procédé selon l'une quelconque des revendications précédentes, **caractérisé en ce qu'**une bande métallique est revêtue à une vitesse de déplacement de la bande dans la plage allant de 30 à 220 m par minute, le dispositif d'application pour le mélange de revêtement et/ou le dispositif pour l'exposition à un rayonnement actinique du revêtement polymère pouvant être maintenus fixes.

22. Procédé selon l'une quelconque des revendications précédentes, **caractérisé en ce que** le substrat métallique est déplacé à une vitesse dans la plage allant de 0,01 à 200 m par minute, et **en ce que** le dispositif d'application pour le mélange de revêtement et/ou le dispositif pour l'exposition à un rayonnement actinique du revêtement polymère sont maintenus fixes.

23. Procédé selon l'une quelconque des revendications précédentes, **caractérisé en ce que** le substrat métallique est maintenu fixe et **en ce que** le dispositif d'application pour le mélange de revêtement et/ou le dispositif pour l'exposition à un rayonnement actinique du revêtement polymère, notamment chacun sous la forme d'un dispositif automatisé, sont déplacés à une vitesse dans la plage allant de 0,01 à 200 m par minute.

24. Procédé selon l'une quelconque des revendications précédentes, **caractérisé en ce que** le dispositif d'application pour le mélange de revêtement et le dispositif pour l'exposition à un rayonnement actinique du revêtement polymère sont couplés l'un avec l'autre, notamment sont maintenus ou acheminés à un même écart.

25. Procédé selon l'une quelconque des revendications précédentes, **caractérisé en ce que** le revêtement polymère après l'application est porté à des températures qui sont 1 à 60 °C supérieures à la température du substrat métallique lors de l'application du revêtement polymère, afin de laisser s'écouler le revêtement polymère.

26. Procédé selon l'une quelconque des revendications précédentes, **caractérisé en ce que** le revêtement polymère est exposé à un rayonnement actinique immédiatement après l'application ou ultérieurement, notamment après un séchage.

27. Procédé selon l'une quelconque des revendications précédentes, **caractérisé en ce que** le substrat revêtu avec le revêtement polymère partiellement durci est ensuite porté à des températures dans la plage allant de 80 à 180 °C, afin de déclencher la réaction de post-réticulation et de réaliser un durcissement thermique.

28. Procédé selon l'une quelconque des revendications précédentes, **caractérisé en ce que** toutes les arêtes du bord découpé sont recouvertes avec le revêtement polymère.

29. Procédé selon l'une quelconque des revendications précédentes, **caractérisé en ce que** le revêtement polymère essentiellement ou entièrement durci présente une épaisseur de couche dans la plage allant de 1 à 800 µm, de préférence et notamment en cas de revêtement automatisé, dans la plage allant de 10 à 50 µm.

30. Procédé selon l'une quelconque des revendications précédentes, **caractérisé en ce qu'**après l'application et le durcissement au moins partiel du revêtement polymère, un revêtement constitué par à chaque fois au moins un vernis pour électrodéposition, un substitut de vernis pour électrodéposition, un vernis et/ou un mélange semblable à un vernis, est appliqué sur le substrat métallique, éventuellement séché et éventuellement durci.

31. Procédé selon l'une quelconque des revendications précédentes, **caractérisé en ce que** le revêtement polymère essentiellement ou entièrement durci supporte une sollicitation thermique ultérieure d'au moins 140 °C, de préférence d'au moins 180 °C, sans formation de fissures.

32. Procédé selon l'une quelconque des revendications précédentes, **caractérisé en ce qu'**après l'application et le durcissement au moins partiel du revêtement polymère et éventuellement après l'application d'au moins un revêtement supplémentaire, une couche adhésive est appliquée sur le substrat métallique, et le substrat métallique ainsi préparé est collé avec au moins un autre élément.

33. Procédé selon l'une quelconque des revendications précédentes, **caractérisé en ce que** le substrat métallique est assemblé avec au moins un autre élément, p. ex. par clinchage.

34. Procédé selon l'une quelconque des revendications précédentes, **caractérisé en ce que** le revêtement polymère essentiellement ou entièrement durci est résistant à la corrosion dans une mesure telle qu'aucun dépôt de rouille n'est encore identifiable après 1 000 h d'un test de pulvérisation de sel selon DIN 50021.

35. Procédé selon l'une quelconque des revendications précédentes, **caractérisé en ce que** le revêtement polymère essentiellement ou entièrement durci est résistant à la corrosion dans une mesure telle qu'aucun dépôt de rouille n'est encore identifiable après 10 cycles d'un test de variation du climat selon VDA 621-415, de préférence également après 20 cycles.

36. Procédé selon l'une quelconque des revendications précédentes, **caractérisé en ce que** le revêtement polymère essentiellement ou entièrement durci présente une dureté par empreinte selon DIN EN ISO 2815 à une épaisseur de film sec d'approximativement 100 µm dans la plage allant de 60 à 150.

37. Procédé selon l'une quelconque des revendications précédentes, **caractérisé en ce que** le revêtement polymère essentiellement ou entièrement durci présente une élasticité d'au moins 5 mm lors d'un essai d'emboutissage selon DIN EN ISO 1520, de préférence d'au moins 6 mm.

38. Procédé selon l'une quelconque des revendications précédentes, **caractérisé en ce qu'**au moins un bord et au moins un joint sont protégés simultanément.
